(19) Europäisches Patentamt / European Patent Office / Office européen des brevets

(11) **EP 3 901 101 A1**

(12) **EUROPEAN PATENT APPLICATION**
published in accordance with Art. 153(4) EPC

(43) Date of publication:
**27.10.2021 Bulletin 2021/43**

(21) Application number: **19900021.7**

(22) Date of filing: **20.12.2019**

(51) Int Cl.:
*C01G 53/00* (2006.01)        *H01M 4/505* (2010.01)
*H01M 4/525* (2010.01)

(86) International application number:
**PCT/JP2019/049991**

(87) International publication number:
**WO 2020/130118 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2018 JP 2018238842**

(71) Applicants:
• **SUMITOMO CHEMICAL COMPANY LIMITED**
**Chuo-ku**
**Tokyo 104-8260 (JP)**

• **Tanaka Chemical Corporation**
**Fukui-shi, Fukui 910-3131 (JP)**

(72) Inventor: **INOUE Masashi**
**Niihama-shi, Ehime 792-8521 (JP)**

(74) Representative: **Vossius & Partner**
**Patentanwälte Rechtsanwälte mbB**
**Siebertstraße 3**
**81675 München (DE)**

(54) **LITHIUM TRANSITION METAL COMPLEX OXIDE POWDER, NICKEL-CONTAINING TRANSITION METAL COMPLEX HYDROXIDE POWDER, POSITIVE ELECTRODE ACTIVE SUBSTANCE FOR LITHIUM SECONDARY BATTERY, POSITIVE ELECTRODE FOR LITHIUM SECONDARY BATTERY, AND LITHIUM SECONDARY BATTERY**

(57)     **A lithium transition metal complex oxide powder, in which the following requirements (1) and (2) are satisfied.**
**Requirement (1):** When a press density obtained by compressing the lithium transition metal complex oxide powder at a pressure of 45 MPa is defined as A and a tapped density of the lithium transition metal complex oxide powder is defined as B, A/B that is a ratio between A and B is 1.8 or more and 3.5 or less.
**Requirement (2): A, which is the press density, exceeds 2.7 g/cm$^3$.**

FIG. 2

EP 3 901 101 A1

**Description**

**[Technical Field]**

The present invention relates to a lithium transition metal complex oxide powder, a nickel-containing transition metal complex hydroxide powder, a positive electrode active material for a lithium secondary battery, a positive electrode for a lithium secondary battery, and a lithium secondary battery.

Priority is claimed on Japanese Patent Application No. 2018-238842, filed in Japan on December 20, 2018, the content of which is incorporated herein by reference.

**[Background Art]**

Lithium transition metal complex oxides are being used as positive electrode active materials for lithium secondary batteries. Attempts of putting lithium secondary batteries into practical use not only for small-sized power sources in mobile phone applications, notebook personal computer applications, and the like but also for medium-sized or large-sized power sources in automotive applications, power storage applications, and the like have already been underway.

A variety of attempts are underway to improve the battery characteristics such as the discharge rate characteristics or the cycle characteristics of lithium secondary batteries. For example, Patent Document 1 describes a dissimilar metal-substituted **lithium manganate compound in which the average primary particle diameter is 0.5 $\mu$m or more and 1.0 $\mu$m or less, the BET specific surface area is 1.0 m$^2$/g** or more and 3.0 m$^2$/g or less, the tapped density is 1.5 g/cm$^3$ or more, and the tapped density/press density ratio is 70% or more. It is described that, since such a material has a high loading property, in a case where the material is used as a positive electrode active material, the capacity energy density is high, and the discharge rate characteristics also become favorable.

[Citation List]

[Patent Document]

[Patent Document 1]
Japanese Unexamined Patent Application, First Publication No. 2011-105565

**[Summary of Invention]**

**[Technical Problem]**

In the middle of the proceeding of the application fields of lithium secondary batteries, for positive electrode active materials for lithium secondary batteries, there is a demand for improvement not only in the discharge rate characteristics but also the cycle characteristics.

The present invention has been made in view of the above-described circumstances, and an object of the present invention is to provide a lithium transition metal complex oxide powder having high discharge rate characteristics and high cycle characteristics in the case of being used as a positive electrode active material for a lithium secondary battery, a nickel-containing transition metal complex hydroxide, a positive electrode active material for a lithium secondary battery, a positive electrode for a lithium secondary battery, and a lithium secondary battery.

[Solution to Problem]

That is, the present invention includes the following inventions [1] to [10].

[1] A lithium transition metal complex oxide powder, in which the following requirements (1) and (2) are satisfied.

Requirement (1): When a press density obtained by compressing the lithium transition metal complex oxide powder at a pressure of 45 MPa is defined as A and a tapped density of the lithium transition metal complex oxide powder is defined as B, A/B that is a ratio between A and B is 1.8 or more and 3.5 or less.
Requirement (2): A, which is the press density, exceeds 2.7 g/cm$^3$.

[2] The lithium transition metal complex oxide powder according to [1], in **which an average primary particle diameter is 1.0 $\mu$m or more.**
[3] The lithium transition metal complex oxide powder according to [1] or [2], in which the following formula (I) is

satisfied.

$$Li[Li_x(Ni_{(1-y-z-w)}Co_yMn_zM_w)_{1-x}]O_2 ... \qquad (I)$$

(Here, $-0.1 \leq x \leq 0.2$, $0 \leq y \leq 0.4$, $0 \leq z \leq 0.4$, $0 \leq w \leq 0.1$, and $y + z + w < 1$ are satisfied, and M represents one or more elements selected from the group consisting of Fe, Cu, Ti, Mg, Al, W, B, Mo, Nb, Zn, Sn, Zr, Ga, La, and V.)
[4] The lithium transition metal complex oxide powder according to any one of [1] to [3], in which a BET specific surface area is 0.1 $m^2$/g or more and 3 $m^2$/g or less.
[5] The lithium transition metal complex oxide powder according to any one of [1] to [4], in which an average particle diameter ($D_{50}$) in particle size distribution **measurement is 1 $\mu$m or more and 5 $\mu$m or less.**
[6] A nickel-containing transition metal complex hydroxide powder, in which the following requirements (S) and (T) are satisfied.

Requirement (S): When a press density obtained by compressing the nickel-containing transition metal complex hydroxide powder at a pressure of 45 MPa is defined as X and a tapped density of the nickel-containing transition metal complex hydroxide powder is defined as Y, X/Y that is a ratio between X and Y is 1.5 or more and 2.5 or less.
Requirement (T): X, which is the press density, exceeds 1.8 $g/cm^3$.

[7] The nickel-containing transition metal complex hydroxide powder according to [6], in which the following formula (II) that represents mole ratios of metal elements is **satisfied and, in the following formula (II), $0 \leq a \leq 0.4$, $0 \leq b \leq 0.4$, and $0 \leq c \leq 0.1$ are** satisfied.

$$Ni : Co : Mn : M^1 = (1 - a - b - c) : a : b : c ... \qquad (II)$$

(Here, $M^1$ is one or more elements selected from the group consisting of Fe, Cu, Ti, Mg, Al, W, B, Mo, Nb, Zn, Sn, Zr, Ga, La, and V.)
[8] A positive electrode active material for a lithium secondary battery, containing the lithium transition metal complex oxide powder according to any one of [1] to [5].
[9] A positive electrode for a lithium secondary battery, containing the positive electrode active material for a lithium secondary battery according to [8].
[10] A lithium secondary battery having the positive electrode for a lithium secondary battery according to [9].

**[Advantageous Effects of Invention]**

According to the present invention, it is possible to provide a lithium transition metal complex oxide powder having high discharge rate characteristics and high cycle characteristics in the case of being used as a positive electrode active material for a lithium secondary battery, a nickel-containing transition metal complex hydroxide, a positive electrode active material for a lithium secondary battery, a positive electrode for a lithium secondary battery, and a lithium secondary battery.

**[Brief Description of Drawings]**

Fig. 1A is a schematic configuration view showing an example of a lithium-ion secondary battery.
Fig. 1B is a schematic configuration view showing the example of the lithium-ion secondary battery.
Fig. 2 is a schematic view for describing a method for measuring a press density.

[Description of Embodiments]

<Lithium transition metal complex oxide powder>

The present embodiment is a lithium transition metal complex oxide powder, in which the following requirements (1) and (2) are satisfied.

Requirement (1): When a press density obtained by compressing the lithium transition metal complex oxide powder at a pressure of 45 MPa is defined as A and a tapped density of the lithium transition metal complex oxide powder is defined as B, the ratio (A/B) between A and B is 1.8 or more and 3.5 or less.

Requirement (2): A, which is the press density, exceeds 2.7 g/cm$^3$.

The lithium transition metal complex oxide powder of the present embodiment has high discharge rate characteristics and high cycle characteristics in the case of being used as a positive electrode active material for a lithium secondary battery.

Here, the "discharge rate characteristics" refer to the rate of the discharge capacity at 10 CA in the case of defining the discharge capacity at 0.2 CA as 100%. As this rate increases, batteries exhibit a higher the output, which is preferable in terms of the battery performance.

**The "cycle characteristics" refer to the** maintenance rate of the discharge capacity after repetition of the discharge cycle with respect to the initial discharge capacity. As the retention rate increases, it is possible to further suppress a decrease in the battery capacity after repetition of the charge and discharge cycle, which is preferable in terms of the battery performance.

<<Requirement (1)>>

In the present embodiment, the press density obtained by compressing the lithium transition metal complex oxide powder at a pressure of 45 MPa is defined as A. The tapped density of the lithium transition metal complex oxide powder is defined as B. In the present embodiment, this ratio (A/B) is 1.8 or more and 3.5 or less. The ratio (A/B) is preferably 1.82 or more, more preferably 1.84 or more, and particularly preferably 1.86 or more.

In addition, the ratio (A/B) is preferably 3.0 or less, more preferably 2.95 or less, and particularly preferably 2.9 or less.

The above-described upper limit value and lower limit value can be randomly combined together. As the combination, ratios (A/B) of 1.82 or more and 3.0 or less, 1.84 or more and 2.95 or less, and 1.86 or more and 2.9 or less are exemplary examples.

In a case where the ratio (A/B) is less than the above-described lower limit value (that is, less than 1.8), the tapped density becomes too large, in other words, the area in which the particles of a lithium transition metal complex oxide are in contact with each other becomes large in the lithium transition metal complex oxide powder. When such a lithium transition metal complex oxide powder is used to produce a positive electrode, the battery resistance is likely to increase and the discharge rate characteristics are likely to become poor to an extent that an interface formed only of the particles of the lithium transition metal complex oxide is likely to be generated.

In a case where the ratio (A/B) exceeds the above-described upper limit value (that is, 3.5), the tapped density becomes too small, in other words, there are a larger number of pores inside the particles or between the particles in the lithium transition metal complex oxide powder. When such a lithium transition metal complex oxide powder is used to produce a positive electrode, since the volume change of the positive electrode caused by a pressing step during the production of the positive electrode becomes too large, the particles of the lithium transition metal complex oxide are likely to crack, and the cycle characteristics are likely to become poor.

• Method for measuring press density

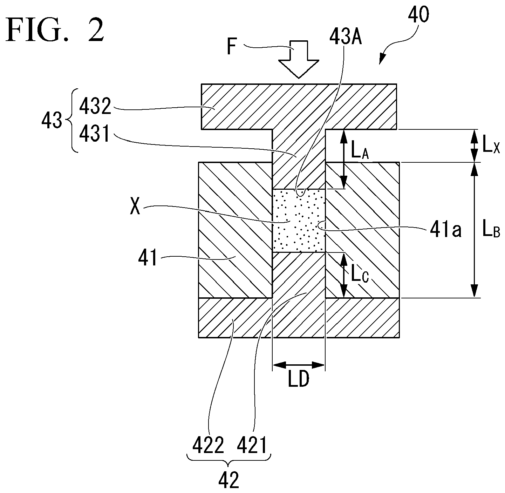

The method for measuring the press density in the present embodiment will be described with reference to Fig. 2.

A press density measuring instrument 40 shown in Fig. 2 has jigs 41, 42, and 43.

The jig 41 has a cylindrical shape. An internal space 41a of the jig 41 is cylindrical. An inner diameter LD of the internal space 41a is 15 mm.

The jig 42 has a cylindrical plug portion 421 and a flange portion 422 connected to the plug portion 421. The plug portion 421 and the flange portion 422 are connected to each other at the center of the flange portion 422 in a plan view. The diameter of the plug portion 421 is equal to the inner diameter LD of the jig 41 and is a size that makes the plug portion 421 fit tightly into the internal space 41a of the jig 41.

The jig 43 has the same shape as the jig 42 and has a cylindrical plug portion 431 and a flange portion 432 connected to the plug portion 431. The diameter of the plug portion 431 is equal to the inner diameter LD of the jig 41 and is a size that makes the plug portion 431 fit tightly into the internal space 41a of the jig 41.

The press density measuring instrument 40 is used with the plug portion 421 of the jig 42 inserted into an opening portion of the jig 41 on one end side and the plug portion 431 of the jig 43 inserted into an opening portion of the jig 41 on the other end side.

In measurement using the press density measuring instrument 40, first, the jig 42 is fitted into the jig 41, and the powder X (3 g) that is a measurement object is loaded into the internal space 41a in a state in which the flange portion 422 is in contact with the jig 41. Next, the jig 43 is fitted into the jig 41, and the tip of the plug portion 431 is brought into contact with the powder X.

Next, a load F is applied to the jig 43 using a pressing machine to apply pressure to the powder X in the internal space 41a through the jig 43.

Since the area of a contact surface 43A in which the jig 43 comes into contact with the powder X is 177 mm$^2$, the load F is set to 8 kN. In the present embodiment, the load F is applied for one minute.

After stopping and removing the load, the length of a gap Lx between the jig 43 and the jig 41 is measured. The thickness of the powder X is calculated from the following formula (PI).

$$\text{Thickness of powder X (mm)} = L_B + L_x - L_A - L_C \,... \,\text{(P1)}$$

In the formula (P1), $L_B$ is the height of the cylindrical jig 41. Lx is the length of the gap between the jig 41 and the jig 43. $L_A$ is the height of the plug portion 431 of the jig 43. $L_C$ is the height of the plug portion 421 of the jig 42.

From the obtained thickness of the powder X, the press density is calculated from the following formula (P2).

$$\text{Press density} = \text{powder mass} \div \text{powder volume} \,... \,\text{(P2)}$$

In the formula (P2), the powder mass is the mass (g) of the powder X loaded into in the density measuring instrument 40 shown in Fig. 2.

In the formula (P2), the powder volume is the product of the thickness (mm) of the powder X calculated from the formula (PI) and the area of the contact surface 43A in which the jig 43 comes into contact with the powder X.

When the lithium transition metal complex oxide powder is used as the powder X, it is possible to calculate the press density (A).

When the nickel-containing transition metal complex hydroxide powder is used as the powder X, it is possible to calculate a press density (X) described below.

• Method for measuring tapped density (B)

As the tapped density of the lithium transition metal complex oxide powder, a value obtained by the method described in JIS R 1628-1997 is used.

In the present embodiment, the tapped density of the lithium transition metal complex oxide powder is not limited, and 1.0 g/cm$^3$ or more and 2.0 g/cm$^3$ or less is an exemplary example.

«Requirement (2)»

In the present embodiment, the press density (A) that is calculated by the above-described method exceeds 2.7 g/cm$^3$, preferably 2.75 g/cm$^3$ or more, and more preferably 2.8 g/cm$^3$ or more. When the press density (A) is the above-described lower limit value (that is, 2.7 g/cm$^3$) or less, it is likely that a large number of pores are present inside the particles of the lithium transition metal complex oxide or between the particles of the lithium transition metal complex oxide in the powder. In such a powder, the particles of the lithium transition metal complex oxide are likely to crack, and the cycle characteristics are likely to become poor.

The upper limit value of the press density (A) is not limited, and 3.6 g/cm$^3$ or less is an exemplary example.

The above-described upper limit value and lower limit value can be randomly combined together. As the combination, press densities (A) of more than 2.7 g/cm$^3$ and 3.6 g/cm$^3$ or less, 2.75 g/cm$^3$ or more and 3.6 g/cm$^3$ or less, and 2.8 g/cm$^3$ or more and 3.6 g/cm$^3$ or less are exemplary examples.

When the lithium transition metal complex oxide powder of the present embodiment that satisfies the requirement (1) is used as a positive electrode active material, it is possible to suppress the occurrence of cracking in the particles of the lithium transition metal complex oxide. When the lithium transition metal complex oxide powder of the present embodiment that satisfies the requirement (2) is used as a positive electrode active material, it is possible to enhance the loading property. That is, when the lithium transition metal complex oxide powder of the present embodiment that satisfies the requirements (1) and (2) is used as a positive electrode active material, it is possible to produce a positive electrode having a favorable loading property while suppressing the occurrence of cracking in the particles of the lithium transition metal complex oxide.

Since a favorable loading property makes it easy for the positive electrode to adhere to a conductive material, the contact area with the conductive material becomes large. Therefore, it is possible to obtain high discharge rate characteristics.

On the other hand, when pressure is applied to enhance the loading property, the particles of the lithium transition metal complex oxide are likely to crack. According to the present embodiment, since it is possible to suppress the cracking of the particles of the lithium transition metal complex oxide, an increase in the number of particle interfaces in the lithium transition metal complex oxide can be suppressed. Therefore, it is possible to produce a positive electrode having a low resistance.

In addition, when the contact area with the conductive material becomes large, since it is possible to secure a conduction path even in a case where the particles of the lithium transition metal complex oxide crack during the repetition of charging and discharging, the cycle characteristics become favorable.

<<Average primary particle diameter>>

The lithium transition metal complex oxide powder of the present embodiment contains only primary particles or primary particles and secondary particles formed by the aggregation of the primary particles.

Here, the "primary particle" is a particle in which no clear grain boundary is shown on the particle surface in the case of observing the particle with an electron microscope or the like.

**More specifically, the "primary particle" means a particle in which, apparently,** no grain boundary is present at the time of being observed in a visual field with a scanning electron microscope or the like at a magnification of 5000 times or more and **20000 times or less. The "secondary particle" is an aggregate of the primary particles.**

**The average primary particle diameter is preferably 1 $\mu$m or more, more preferably 1.2 $\mu$m or more, and particularly preferably 1.4 $\mu$m or more. When the** average primary particle diameter is the above-**described lower limit value (that is, 1 $\mu$m** or more) or more, it is possible to suppress an increase in the number of particle interfaces in the lithium transition metal complex oxide and to produce a positive electrode having a low resistance. In addition, it is possible to produce a positive electrode having favorable cycle characteristics and favorable discharge rate characteristics.

**The average primary particle diameter is preferably 3.0 $\mu$m or less, more preferably 2.0 or less, particularly preferably 1.9 $\mu$m or less, and still more preferably 1.8 $\mu$m or less.**

The above-described upper limit value and lower limit value can be randomly combined together.

**As the combination, average primary particle diameters of 1 $\mu$m or more and 3.0 $\mu$m or less, 1.2 $\mu$m or more and 2.0 or less, 1.2 $\mu$m or more and 1.9 $\mu$m or less, and 1.4 $\mu$m or more and 1.8 $\mu$m or less are exemplary examples.**

In the present embodiment, the average primary particle diameter is obtained by the following method.

First, the lithium transition metal complex oxide powder is placed on a conductive sheet attached onto a sample stage and observed with a scanning electron microscope (SEM) while being irradiated with an electron beam at an accelerating voltage of 20 kV. Fifty primary particles are randomly extracted from an image obtained by the SEM observation (SEM photograph).

Next, for each of the primary particles, the distance between parallel lines that are drawn in a certain direction to sandwich the projected image of the primary particle (constant direction diameter) is measured as the particle diameter of the primary particle. The arithmetic average value of the obtained particle diameters of the primary particles is regarded as the average primary particle diameter of the lithium transition metal complex oxide powder.

As the scanning electron microscope, for example, JSM-5510 manufactured by JEOL Ltd. can be used.

<<Composition formula (I)>>

The lithium transition metal complex oxide powder of the present embodiment is preferably represented by the following composition formula (I).

$$\text{Li}[\text{Li}_x(\text{Ni}_{(1-y-z-w)}\text{Co}_y\text{Mn}_z\text{M}_w)_{1-x}]\text{O}_2 \ldots \qquad \text{(I)}$$

(Here, $-0.1 \leq x \leq 0.2$, $0 \leq y \leq 0.4$, $0 \leq z \leq 0.4$, $0 \leq w \leq 0.1$, and $y + z + w < 1$ are satisfied, and M represents one or more elements selected from the group consisting of Fe, Cu, Ti, Mg, Al, W, B, Mo, Nb, Zn, Sn, Zr, Ga, La, and V.)

From the viewpoint of obtaining a lithium secondary battery having favorable cycle characteristics, x in the composition formula (II) is preferably more than 0, more preferably 0.01 or more, and still more preferably 0.02 or more. In addition, from the viewpoint of obtaining a lithium secondary battery having a higher initial coulombic efficiency, x in the composition formula (I) is preferably 0.1 or less, more preferably 0.08 or less, and still more preferably 0.06 or less.

The upper limit value and the lower limit value of x can be randomly combined together.

**In the present embodiment, $0 < x \leq 0.2$ is preferable, $0 < x \leq 0.1$ is more preferable, $0.01 \leq x \leq 0.08$ is still more preferable, and $0.02 \leq x \leq 0.06$ is parti**cularly preferable.

From the viewpoint of obtaining a lithium secondary battery having a high discharge capacity, in the composition formula (I), $0 < y + z + w < 1$ is preferable, $0 < \mathbf{y + z + w} \leq \mathbf{0.5}$ is more preferable, $0 < \mathbf{y + z + w} \leq \mathbf{0.25}$ is still more preferable, and $0 < \mathbf{y + z + w} \leq \mathbf{0.2}$ is particularly preferable.

In addition, from the viewpoint of obtaining a lithium secondary battery having a low battery internal resistance, y in the composition formula (I) is more than 0, preferably 0.01 or more, more preferably 0.05 or more, and still more preferably 0.06 or more. In addition, from the viewpoint of obtaining a lithium secondary battery having high thermal stability, y in the composition formula (I) is more preferably 0.35 or less and still more preferably 0.3 or less.

The upper limit value and the lower limit value of y can be randomly combined together.

**In the present embodiment, $0 < y \leq 0.4$ is preferable.**

In addition, as the combination of the upper limit value and the lower limit value of y, 0.01 or more and 0.4 or less, 0.05 or more and 0.35 or less, and 0.06 or more and 0.3 or less are exemplary examples.

In addition, from the viewpoint of obtaining a lithium secondary battery having high cycle characteristics, z in the composition formula (I) is preferably 0.01 or more, more preferably 0.02 or more, and still more preferably 0.04 or more. In addition, from the viewpoint of obtaining a lithium secondary battery having high preservability at high temperatures (for example, in an environment at 60°C), z in the composition formula (I) is preferably 0.4 or less, more preferably 0.35 or less, and still more preferably 0.3 or less.

The upper limit value and the lower limit value of z can be randomly combined together.

As the combination, z's of 0.01 or more and 0.4 or less, 0.02 or more and 0.35 or less, and 0.04 or more and 0.3 or less are exemplary examples.

$M^1$ in the composition formula (I) is one or more metals selected from the group consisting of Fe, Cu, Ti, Mg, Al, W, B, Mo, Nb, Zn, Sn, Zr, Ga, La, and V.

These metals make it possible to produce positive electrodes having a low internal resistance, excellent discharge rate characteristics, and excellent cycle characteristics.

In addition, M in the composition formula (I) is preferably one or more metals selected from the group consisting of Ti, Mg, Al, W, B, and Zr from the viewpoint of obtaining a lithium secondary battery having high cycle characteristics and preferably one or more metals selected from the group consisting of Al, W, B, and Zr from the viewpoint of obtaining a lithium secondary battery having high thermal stability.

In addition, from the viewpoint of obtaining a lithium secondary battery having a low battery internal resistance, w in the composition formula (I) may be 0, but is preferably more than 0, more preferably 0.0005 or more, and still more preferably 0.001 or more. In addition, from the viewpoint of obtaining a lithium secondary battery exhibiting high discharge rate characteristics, w in the composition formula (I) is preferably 0.09 or less, more preferably 0.08 or less, and still more preferably 0.07 or less.

The upper limit value and the lower limit value of w can be randomly combined together.

**As the combination, w's of** more than 0 and 0.09 or less, 0.0005 or more and 0.08 or less, and 0.001 or more and 0.07 or less are exemplary examples.

The composition analysis of the lithium transition metal complex oxide powder can be measured using an inductively coupled plasma emission spectrometer. For the composition analysis, it is possible to use, for example, SPS3000 manufactured by SII NanoTechnology Inc.

<<BET specific surface area>>

The BET specific surface area of the lithium transition metal complex oxide powder of the present embodiment is preferably 0.1 $m^2/g$ or more and 3 $m^2/g$ or less. The BET specific surface area is preferably 0.2 $m^2/g$ or more, more preferably 0.3 $m^2/g$ or more, and particularly preferably 0.5 $m^2/g$ or more. In addition, the BET specific surface area of the lithium transition metal complex oxide powder of the present embodiment is preferably 2.5 $m^2/g$ or less, more preferably 2.0 $m^2/g$ or less, and particularly preferably 1.8 $m^2/g$ or less.

The above-described upper limit value and lower limit value can be randomly combined together.

As the combination, BET specific surface areas of the lithium transition metal complex oxide powder of 0.2 $m^2/g$ or more and 2.5 $m^2/g$ or less, 0.3 $m^2/g$ or more and 2.0 $m^2/g$ or less, and 0.5 $m^2/g$ or more and 1.8 $m^2/g$ or less are exemplary examples.

The BET specific surface area can be measured by the following method. The BET specific surface area is measured using a BET specific surface area measuring instrument after drying the lithium transition metal complex oxide powder (1 g) in a nitrogen atmosphere at 105°C for 30 minutes. It is possible to use, for example, Macsorb (registered trademark) manufactured by Mountech Co., Ltd.

«Average particle diameter»

The average particle diameter ($D_{50}$) of the lithium transition metal complex **oxide powder of the present embodiment is preferably 1 $\mu$m or more and 5 $\mu$m or less.**

The average particle diameter ($D_{50}$) **is preferably 1.1 $\mu$m or more, more preferably 1.2 $\mu$m or more, and particularly preferably 1.3 $\mu$m or** more. In addition, the average particle diameter ($D_{50}$) **is preferably 4.9 $\mu$m or less, more preferably 4.8 $\mu$m or less, and particularly preferably 4.7 $\mu$m or less.**

The above-described upper limit value and lower limit value can be randomly combined together.

As the combination, average particle diameters **($D_{50}$'s) of 1.1 $\mu$m or more and 4.9 $\mu$m or less, 1.2 $\mu$m or more and 4.8 $\mu$m or less, and 1.3 $\mu$m or more and 4.7 $\mu$m or** less are exemplary examples.

The average particle diameter ($D_{50}$) can be measured by the following method.

First, the lithium transition metal complex oxide (0.1 g) is injected into a 0.2 mass% sodium hexametaphosphate aqueous solution (50 ml) using a laser diffraction particle size distribution meter. Therefore, a dispersion liquid in which the powder of the lithium transition metal complex oxide is dispersed is obtained.

The particle size distribution of the obtained dispersion liquid is measured, and a volume-based cumulative particle size distribution curve is obtained. In the obtained cumulative particle size distribution curve, the value of the particle size (D50) seen from the fine particle side at the 50% cumulative particle size is regarded as the average particle diameter of the lithium transition metal complex oxide.

As the laser diffraction particle size distribution meter, it is possible to use, for example, a model number: LA-950 manufactured by HORIBA, Ltd.

(Layered structure)

In the present embodiment, the crystal structure of the lithium transition metal complex oxide powder is a layered structure and more preferably a hexagonal crystal structure or a monoclinic crystal structure.

The hexagonal crystal structure belongs to any one space group selected from the group consisting of P3, $P3_1$, $P3_2$, R3, P-3, R-3, P312, P321, $P3_112$, $P3_121$, $P3_212$, $P3_221$, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and $P6_3$/mmc.

In addition, the monoclinic crystal structure belongs to any one space group selected from the group consisting of P2, $P2_1$, C2, Pm, Pc, Cm, Cc, P2/m, $P2_1$/m, C2/m, P2/c, $P2_1$/c, and C2/c.

Among these, the crystal structure is particularly preferably a hexagonal crystal structure belonging to the space group R-3m or a monoclinic crystal structure belonging to C2/m in order to obtain a lithium secondary battery having a high discharge capacity.

<Nickel-containing transition metal complex hydroxide powder>

The present embodiment is a nickel-containing transition metal complex hydroxide powder that satisfies the following requirements (S) and (T). The nickel-containing transition metal complex hydroxide powder of the present embodiment can be suitably used as a precursor of a positive electrode active material for a lithium secondary battery.

Requirement (S): When a press density obtained by compressing the nickel-containing transition metal complex hydroxide powder at a pressure of 45 MPa is defined as X and a tapped density of the nickel-containing transition metal complex hydroxide powder is defined as Y, the ratio (X/Y) between X and Y is 1.5 or more and 2.5 or less.

Requirement (T): X, which is the press density, exceeds 1.8 g/cm$^3$.

• Requirement (S)

In the nickel-containing transition metal complex hydroxide powder of the present embodiment, when a press density obtained by compressing the nickel-containing transition metal complex hydroxide powder at a pressure of 45 MPa is defined as X and a tapped density of the nickel-containing transition metal complex hydroxide powder is defined as Y, the ratio (X/Y) between X and Y is 1.5 or more and 2.5 or less, preferably 1.55 or more and 2.45 or less, more preferably 1.6 or more and 2.4 or less, and particularly preferable 1.65 or more and 2.35 or less.

X, which is the press density, can be measured by the same method as in the method for measuring the press density described in the requirement (1) for the lithium transition metal complex oxide powder except that the lithium transition metal complex oxide powder is used as the powder X.

• Requirement (T)

In the nickel-containing transition metal complex hydroxide powder of the present embodiment, X, which is the press density, is more than 1.8 g/cm$^3$, preferably 1.85 g/cm$^3$ or more, more preferably 1.9 g/cm$^3$ or more, and particularly preferable 2.0 g/cm$^3$ or more. In addition, the upper limit value of X, which is the press density, is not limited and 2.7 g/cm$^3$ or less is an exemplary example.

The upper limit value and the lower limit value can be randomly combined together.

**As the combination, X's, which** are the press densities, of more than 1.8 g/cm$^3$ and 2.7 g/cm$^3$ or less, 1.85 g/cm$^3$ or more and 2.7 g/cm$^3$ or less, and 1.9 g/cm$^3$ or more and 2.7 g/cm$^3$ or less are exemplary examples.

Y, which is the tapped density of the nickel-containing transition metal complex hydroxide powder, is not limited and 0.8 g/cm$^3$ or more and 1.6 g/cm$^3$ or less is an exemplary example.

As Y, which is the tapped density of the nickel-containing transition metal complex hydroxide powder, a value obtained by the method described in JIS R 1628-1997 is used.

The use of the nickel-containing transition metal complex hydroxide powder that satisfies the requirements (S) and (T) makes it possible to produce a lithium transition metal complex oxide powder that satisfies the requirements (1) and (2).

<<Metal composition ratio of nickel-containing transition metal complex hydroxide>>

The nickel-containing transition metal complex hydroxide powder of the present embodiment satisfies the following formula (II) that represents mole ratios of metal **elements and, in the following formula (II), $0 \leq a \leq 0.4$, $0 \leq b \leq 0.4$, and $0 \leq c \leq 0.1$ are** preferable.

$$Ni : Co : Mn : M^1 = (1 - a - b - c) : a : b : c ... \qquad (II)$$

(Here, $M^1$ is one or more elements selected from the group consisting of Fe, Cu, Ti, Mg, Al, W, B, Mo, Nb, Zn, Sn, Zr, Ga, La, and V.)

· a

a in the formula (II) is preferably 0.01 or more, more preferably 0.05 or more, and particularly preferably 0.06 or more. In addition, a is preferably 0.40 or less, more preferably 0.35 or less, and still more preferably 0.3 or less.

The above-described upper limit value and lower limit value can be randomly combined together.

As the combination, a's of 0.01 or more and 0.40 or less, 0.05 or more and 0.35 or less, and 0.06 or more and 0.3 or less are exemplary examples.

· b

b in the formula (II) is preferably 0.01 or more, more preferably 0.02 or more, and particularly preferably 0.04 or more. In addition, b is preferably 0.40 or less, more preferably 0.35 or less, and still more preferably 0.3 or less.

The above-described upper limit value and lower limit value can be randomly combined together,

**As the combination, b's of 0.01 or more and 0.40 or less, 0.02 or more and 0.35** or less, and 0.04 or more and 0.3 or less are exemplary examples.

· c

c in the formula (II) may be 0, but is preferably more than 0, more preferably 0.0005 or more, and particularly preferably 0.001 or more. In addition, c is preferably 0.09 or less, more preferably 0.08 or less, and particularly preferably 0.07 or less.

The above-described upper limit value and lower limit value can be randomly combined together.

As the combination, c's of more than 0 and 0.09 or less, 0.0005 or more and 0.08 or less, and 0.001 or more and 0.07 or less are exemplary examples.

· $M^1$

$M^1$ in the formula (II) is one or more elements selected from the group consisting of Fe, Cu, Ti, Mg, Al, W, B, Mo, Nb, Zn, Sn, Zr, Ga, La, and V.

The composition formula of the nickel transition metal complex hydroxide can be represented by $Ni_{(1-a-b-c)}Co_aMn_bM^1_c(OH)_{2+d}$ using a, b, c and the element $M^1$ in the formula (II). The d is appropriately adjusted depending on a chemical composition that a hydroxide of each metal element is capable of taking. d is preferably -0.2 or more and 0.4 or less, more preferably -0.1 or more and 0.35 or less, and particularly preferably 0 or more and 0.3 or less.

That is, the composition formula of the nickel transition metal complex hydroxide is preferably represented by the following (formula).

$$Ni_{(1-a-b-c)}Co_aMn_bM^1_c(OH)_{2+d} \qquad (Formula)$$

**(Here, $0 \leq a \leq 0.4$, $0 \leq b \leq 0.4$, and $0 \leq c \leq 0.1$ are** satisfied, d is -0.2 or more and 0.4 or less, and $M^1$ represents one

or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

The composition analysis of the nickel transition metal complex hydroxide powder is carried out using an inductively coupled plasma emission spectrometer after dissolving the nickel transition metal complex hydroxide powder in an acid.

As the inductively coupled plasma emission spectrometer, it is possible to use, for example, SPS3000 manufactured by SII NanoTechnology Inc.

The average particle diameter ($D_{50}$) of the nickel transition metal complex hydroxide powder can be measured by the following method.

First, the nickel transition metal complex oxide (0.1 g) is injected into a 0.2 mass% sodium hexametaphosphate aqueous solution (50 ml) using a laser diffraction particle size distribution meter (for example, manufactured by HORIBA, Ltd., model number: LA-950). Therefore, a dispersion liquid in which the powder of the nickel transition metal complex hydroxide is dispersed is obtained.

The particle size distribution of the obtained dispersion liquid is measured, and a volume-based cumulative particle size distribution curve is obtained. In the obtained cumulative particle size distribution curve, the value of the particle size (D50) seen from the fine particle side at the 50% cumulative particle size is regarded as the average particle diameter of the nickel transition metal complex hydroxide.

<Method for producing lithium transition metal complex oxide powder>

The method for producing the lithium transition metal complex oxide powder of the present embodiment will be described.

The method for producing the lithium transition metal complex oxide powder of the present embodiment is preferably a production method including the following (1), (2), and (3) in this order.

(1) A production step of a nickel-containing transition metal complex hydroxide powder, which is a precursor.
(2) A mixing step of mixing the nickel-containing transition metal complex hydroxide powder and a lithium compound to obtain a mixture.
(3) A step of calcining the mixture to obtain a lithium transition metal complex oxide powder.

[Production step of nickel-containing transition metal complex hydroxide powder]

First, a nickel-containing transition metal complex hydroxide containing metals other than lithium, that is, nickel, which is an essential metal, and optional metals such as cobalt, manganese, and aluminum is prepared.

The nickel-containing transition metal complex hydroxide may be turned into a nickel-containing transition metal complex oxide by a heat treatment. In the present embodiment, it is preferable to use the nickel-containing transition metal complex hydroxide represented by the formula (II).

Usually, the nickel-containing transition metal complex hydroxide powder can be produced by a well-known batch-type co-precipitation method or continuous co-precipitation method. Hereinafter, the production method thereof will be described in detail by taking as an example a nickel-containing transition metal complex hydroxide containing, as metals, nickel, cobalt, and manganese (hereinafter, referred to as transition metal complex hydroxide or nickel cobalt manganese complex hydroxide in some cases).

First, a nickel salt solution, a cobalt salt solution, a manganese salt solution, and a complexing agent are reacted together by the continuous co-precipitation method described in Japanese Unexamined Patent Application, First Publication No. 2002-201028, thereby producing a transition metal complex hydroxide that is represented by the formula (II).

A nickel salt that is a solute of the nickel salt solution is not particularly limited, and, for example, any of nickel sulfate, nickel nitrate, nickel chloride, and nickel acetate can be used.

As a cobalt salt that is a solute of the cobalt salt solution, for example, any of cobalt sulfate, cobalt nitrate, cobalt chloride, and cobalt acetate can be used.

As a manganese salt that is a solute of the manganese salt solution, for example, any of manganese sulfate, manganese nitrate, manganese chloride, and manganese acetate can be used.

The above-described metal salts are used in ratios corresponding to the composition ratio of the formula (II).

That is, the metal salts are used in amounts that cause the mole ratio of nickel, which is the solute of the nickel salt solution, cobalt, which is the solute of the cobalt salt solution, and manganese, which is the solute of the manganese salt solution, to satisfy the relationship between a and b in the formula (II).

In addition, the solvents of the nickel salt solution, the cobalt salt solution, and the manganese salt solution are water.

The complexing agent is an agent capable of form a complex with a nickel ion, a cobalt ion, and a manganese ion in an aqueous solution. As the complexing agent, ammonium ion donors (ammonium sulfate, ammonium chloride, ammonium carbonate, ammonium fluoride, and the like), hydrazine, ethylenediaminetetraacetic acid, nitrilotriacetic acid, uracildiacetic acid, and glycine are exemplary examples.

In the co-precipitation method, in order to adjust the pH value of the liquid mixture containing the nickel salt solution, the cobalt salt solution, the manganese salt solution, and the complexing agent, an alkali metal hydroxide is added to the liquid mixture before the pH of the liquid mixture turns from alkaline into neutral. The alkali metal hydroxide is, for example, a sodium hydroxide aqueous solution or a potassium hydroxide aqueous solution.

The value of pH in the present specification is defined as a value measured when the temperature of the liquid mixture is 40°C. The pH of the liquid mixture is measured when the temperature of the liquid mixture sampled from the reaction vessel reaches 40°C.

When not only the nickel salt solution, the cobalt salt solution, and the manganese salt solution but also the complexing agent are continuously supplied to the reaction vessel, nickel, cobalt, and manganese react together, thereby generating $Ni_{(1-a-b-c)}Co_aMn_bM^1c(OH)_{2+d}$.

At the time of the reaction, the temperature of the reaction vessel is controlled within a range of, for example, 20°C or higher and 80°C or lower and preferably 30°C or higher and 70°C or lower.

At the time of the reaction, the pH value in the reaction vessel is controlled within a range of, for example, pH 9 or higher and pH 13 or lower and preferably pH 11 or higher and pH 13 or lower when the temperature of the aqueous solution is 40°C.

Materials in the reaction vessel are appropriately stirred and mixed together.

As the reaction vessel, it is possible to use a reaction vessel in which the formed reaction precipitate is caused to overflow for separation.

When the metal salt concentrations, stirring speeds, reaction temperature, and reaction pHs of the metal salt solutions that are supplied to the reaction vessel, calcining conditions described below, and the like are appropriately controlled, it is possible to control a variety of physical properties of a lithium metal composite oxide that is finally obtained.

In addition to the control of the above-described conditions, the oxidation state of a reaction product may be controlled by supplying a variety of gases, for example, an inert gas such as nitrogen, argon, or carbon dioxide, an oxidizing gas such as an air or oxygen, or a gas mixture thereof to the reaction vessel.

As a compound that oxidizes the reaction product to be obtained (oxidizing agent), it is possible to use a peroxide such as hydrogen peroxide, a peroxide salt such as permanganate, perchloric acid, hypochlorous acid, nitric acid, halogen, ozone, or the like.

As a compound that reduces the reaction product to be obtained, it is possible to use an organic acid such as oxalic acid or formic acid, sulfite, hydrazine, or the like.

The inside of the reaction vessel may be an inert atmosphere. An inert atmosphere inside the reaction vessel suppresses, among the metals that are contained in the liquid mixture, a metal that is more easily oxidized than nickel being aggregated earlier than nickel. Therefore, it becomes easy to obtain a transition metal complex hydroxide that satisfies the following requirement (T).

In order to form an inert atmosphere in the reaction vessel, a method in which an inert gas is aerated into the reaction vessel or a method in which an inert gas is bubbled in the liquid mixture is an exemplary example.

As the inert gas that can be used in the present embodiment, nitrogen gas or argon gas is an exemplary example, and nitrogen gas is preferable.

In addition, the inside of the reaction vessel may be an appropriate oxidizing containing atmosphere. The oxidizing atmosphere may be an oxygen-containing atmosphere formed by mixing an oxidizing gas into an inert gas or an oxidizing agent may be present in an inert gas atmosphere. When the inside of the reaction vessel is an appropriate oxidizing atmosphere, a transition metal that is contained in the liquid mixture is appropriately oxidized, which makes it easy to control the form of the metal complex oxide.

As oxygen or the oxidizing agent in the oxidizing atmosphere, a sufficient number of oxygen atoms need to be present in order to oxidize the transition metal.

In a case where the oxidizing atmosphere is an oxygen-containing atmosphere, the atmosphere in the reaction vessel can be controlled by a method such as the aeration of an oxidizing gas into the reaction vessel or the bubbling of an oxidizing gas in the liquid mixture.

After the above reaction, the obtained reaction precipitate is washed and then dried, thereby obtaining a nickel cobalt manganese hydroxide as a nickel cobalt manganese complex compound.

At the time of isolating the precursor from the reaction precipitate, a method in which a slurry containing the reaction precipitate (co-precipitate slurry) is dehydrated by centrifugation, suction filtration, or the like is preferably used.

In a case where washing the reaction precipitate only with water leaves an impurity derived from the liquid mixture, a co-precipitate obtained by the dehydration is preferably washed with a washing liquid containing water or an alkali.

In the present embodiment, the co-precipitate is preferably washed with a washing liquid containing an alkali and more preferably washed with a sodium hydroxide solution.

Drying of the washed co-precipitate makes it possible to obtain a nickel cobalt manganese complex hydroxide.

• Pulverization step of nickel-containing transition metal complex hydroxide

In the present embodiment, the production method preferably has a pulverization step of pulverizing the nickel-containing transition metal complex hydroxide. When the pulverization step is carried out, it is possible to control the nickel-containing transition metal complex hydroxide powder to satisfy the requirements (S) and (T).

The use of the nickel-containing transition metal complex hydroxide that satisfies the requirement (S) and the requirement (T) as a precursor makes it possible to produce a lithium transition metal oxide that satisfies the requirements (1) and (2).

When the lithium transition metal oxide that satisfies the requirements (1) and (2) is obtained, it is possible to further improve the discharge rate characteristics and the cycle characteristics.

The pulverization step is preferably carried out using an airflow-type pulverizer, a collision-type pulverizer equipped with a classification mechanism, a pin mill, a ball mill, a jet mill, a counter jet mill equipped with a classification rotor, or the like.

Among these, when the nickel-containing transition metal complex hydroxide is pulverized with a jet mill or counter jet mill, which is an airflow-type pulverizer, it is possible to break the aggregation between primary particles to pulverize the nickel-containing transition metal complex hydroxide.

When the pulverization step with an airflow-type pulverizer is taken as an example, pulverization at a pulverization gas pressure within a range of 0.4 MPa to 0.8 MPa makes it possible to obtain a nickel-containing transition metal complex hydroxide that satisfies the requirements (S) and (T).

The nickel-containing transition metal complex oxide may be obtained by carrying out a heat treatment after the pulverization step. The heat treatment may be carried out, for example, at 300°C to 650°C in an oxidizing atmosphere.

[Mixing step]

The present step is a step of mixing a lithium compound and a nickel-containing transition metal complex hydroxide to obtain a mixture.

• Lithium compound

As the lithium compound that is used in the present invention, it is possible to use any one of lithium carbonate, lithium nitrate, lithium acetate, lithium hydroxide, lithium oxide, lithium chloride, and lithium fluoride or a mixture of two or more thereof. Among these, any one or both of lithium hydroxide and lithium carbonate is preferable.

In addition, in a case where lithium hydroxide contains lithium carbonate as an impurity, the content of lithium carbonate in lithium hydroxide is preferably 5 mass% or less.

The method for mixing the nickel-containing transition metal complex hydroxide and the lithium compound will be described.

After being dried, the nickel-containing transition metal complex hydroxide is mixed with a lithium compound. The drying conditions are not particularly limited, and any of the following drying conditions 1) and 2) are exemplary examples.

1) A condition under which the nickel-containing transition metal complex hydroxide is not oxidized or reduced. Specifically, this is a condition for drying oxides alone or hydroxides alone.
2) A condition under which the nickel-containing transition metal complex hydroxide is oxidized. Specifically, this is a drying condition for oxidizing a hydroxide to an oxide.

In order for the condition under which the precursor is not oxidized or reduced, an inert gas such as nitrogen, helium, or argon may be used in the atmosphere during the drying.

In order for the condition under which a hydroxide is oxidized, oxygen or an air may be used in the atmosphere during the drying.

In addition, in order for the condition under which the nickel-containing transition metal complex hydroxide is reduced, a reducing agent such as hydrazine or sodium sulfite may be used in an inert gas atmosphere during the drying.

After being dried, the nickel-containing transition metal complex hydroxide may be approximately classified.

The above-described lithium compound and the nickel-containing transition metal complex hydroxide are mixed in consideration of the composition ratio of a final target product. For example, the nickel-containing transition metal complex hydroxide is mixed with the lithium compound such that the ratio between the number of lithium atoms and the number of metal atoms that are contained in the nickel-containing transition metal complex hydroxide becomes more than 1.0.

The ratio of the number of lithium atoms to the number of metal atoms is preferably 1.05 or more and more preferably 1.10 or more. The mixture of the nickel-containing transition metal alloy hydroxide and the lithium compound is **calcined** in the subsequent calcining step, whereby a lithium nickel-containing transition metal complex oxide is obtained.

In addition, in the present embodiment, an inert melting agent may be mixed at the same time as the mixing of the lithium compound and the nickel-containing transition metal complex hydroxide.

Calcining of a mixture containing the nickel-containing transition metal complex hydroxide, the lithium compound, and an inert melting agent makes it possible to fire the mixture of the nickel-containing transition metal complex hydroxide and the lithium compound in the presence of the inert melting agent. Calcining of the mixture of the nickel-containing transition metal complex hydroxide and the lithium compound in the presence of an inert melting agent makes it possible to accelerate the growth reaction of particles. Therefore, the growth of the primary particles can be accelerated.

The inert melting agent that can be used in the present embodiment is not particularly limited as long as the inert melting agent does not easily react with the mixture during the calcining. In the present embodiment, one or more selected from the group consisting of a fluoride of one or more elements selected from the group consisting **of Na, K, Rb, Cs, Ca, Mg, Sr, and Ba (hereinafter, referred to as "A"), a chloride of A, a** carbonate of A, a sulfate of A, a nitrate of A, a phosphate of A, a hydroxide of A, a molybdate of A, and A of tungstate are exemplary examples.

Two or more kinds of inert melting agents can be used. In the case of using two or more kinds of inert melting agents, there is also a case where the melting point decreases. In addition, among these inert melting agents, as an inert melting agent for obtaining a highly crystalline lithium transition metal complex oxide powder, any of the carbonate of A, the sulfate of A, and the chloride of A or a combination thereof is preferable. In addition, A is preferably any one or both of sodium (Na) and potassium (K). That is, among the above-described inert melting agents, a particularly preferable inert melting agent is one or more selected from the group consisting of NaOH, KOH, NaCl, KCl, $Na_2CO_3$, $K_2CO_3$, $Na_2SO_4$, and $K_2SO_4$.

The amount of the inert melting agent added may be appropriately adjusted in order to obtain the tapped density and the press density of a lithium transition metal complex oxide to be obtained within the ranges of the present embodiment. For example, the amount of the inert melting agent added at the time of calcining can be set to 1 part by mass or more with respect to 100 parts by mass of the lithium compound.

[Step of calcining mixture to obtain lithium transition metal complex oxide powder]

The calcining temperature of the mixture of the lithium compound and the nickel-containing transition metal complex hydroxide powder is not particularly limited.

From the viewpoint of increasing the charge capacity, the calcining temperature is preferably 600°C or higher and more preferably 650°C or higher.

In addition, the calcining temperature is not particularly limited.

The calcining temperature is preferably 1100°C or lower and more preferably 1050°C or lower since it is possible to prevent the volatilization of lithium on the surface of the primary particles or secondary particles that are contained in the lithium transition metal complex oxide and to obtain a lithium transition metal complex oxide having a target composition.

The upper limit value and the lower limit value of the calcining temperature can be randomly combined together.

As the combination, calcining temperatures of 600°C or higher and 1100°C or lower and 650°C or higher and 1050°C or lower are exemplary examples.

When the calcining temperature is set within a range of 650°C or higher and 1100°C or lower, it is possible to produce a lithium transition metal complex oxide that exhibits a particularly high charge and discharge efficiency and has excellent cycle characteristics.

In the calcining step, the temperature rising rate in the heating step until the highest holding temperature is reached is preferably 180 °C/hour or faster, more preferably 200 °C/hour or faster, and particularly preferably 250 °C/hour or faster.

The highest holding temperature in the present specification is the highest temperature of the holding temperature of the atmosphere in a calcining furnace in a calcining step and means the calcining temperature in the calcining step.

In the case of a main calcining step having a plurality of heating steps, the highest holding temperature means the highest temperature in each heating step.

The temperature rising rate in the present specification is calculated from the time taken while the temperature begins to be raised and reaches the highest holding temperature in a calcining device and a temperature difference between the temperature in the calcining furnace of the calcining device at the time of beginning to raise the temperature and the highest holding temperature.

Regarding the calcining time, the total time taken while the temperature begins to be raised and reaches the calcining temperature and the holding of the mixture at the calcining temperature ends is preferably set to one hour or longer and 30 hours or shorter. When the total time is 30 hours or shorter, it is possible to suppress the volatilization of lithium on the surfaces of primary particles or secondary particles that are contained in the lithium transition metal complex oxide and to suppress the deterioration of the battery performance. When the total time is one hour or longer, the development of crystals favorably proceeds, and it is possible to improve the battery performance.

Even in the case of adding the inert melting agent in the mixing step, the calcining temperature and the total time may be appropriately adjusted within the above-described ranges.

It is also effective to carry out preliminary calcining before the above-described calcining. The temperature of the preliminary calcining is within a range of 300°C or higher and 900°C or lower, and the preliminary calcining is preferably carried out for 0.5 hours or longer and 10 hours or shorter. The preliminary calcining also makes it possible to shorten the calcining time.

In addition, the calcining, the atmosphere, a dry air, an oxygen atmosphere, an inert atmosphere, or the like is used depending on a desired composition, and a plurality of heating steps is carried out as necessary.

In the present invention, the "beginning of raising the temperature" means the time of beginning to raise the temperature for the preliminary calcining in the case of carrying out the preliminary calcining and the time of beginning to raise the temperature rise for the first heating step in the case of including a plurality of heating steps.

• Step of washing calcined product (washing step)

In the case of adding the inert melting agent in the mixing step, it is preferable to wash the calcined lithium transition metal complex oxide powder to remove the remaining inert melting agent. For the washing, pure water or an alkaline washing liquid can be used. As the alkaline washing liquid, aqueous solutions of one or more anhydrides selected from the group consisting of lithium hydroxide (LiOH), sodium hydroxide (NaOH), potassium hydroxide (KOH), lithium carbonate ($Li_2CO_3$), sodium carbonate ($Na_2CO_3$), potassium carbonate ($K_2CO_3$), and ammonium carbonate ($(NH_4)_2CO_3$) and a hydrate thereof are exemplary examples. In addition, as an alkali, it is also possible to use ammonia.

The temperature of the washing liquid that is used for the washing is not particularly limited, but is preferably 15°C or lower, more preferably 10°C or lower, and still more preferably 8°C or lower. When the temperature of the washing liquid is controlled within the above-described range in which the washing liquid does not freeze, it is possible to suppress the excessive elution of lithium ions from the crystal structure of the lithium transition metal complex oxide powder into the washing liquid during the washing.

In the washing step, as a method for bringing the washing liquid and the lithium transition metal complex oxide powder into contact with each other, a method in which the lithium transition metal complex oxide powder is injected into an aqueous solution of each washing liquid and stirred, a method in which an aqueous solution of each washing liquid is applied as a shower water to the lithium transition metal complex oxide, and a method in which the lithium transition metal complex oxide powder is injected and stirred in an aqueous solution of each washing liquid, then, the lithium transition metal complex oxide powder is separated from the aqueous solution of each washing liquid, and then the aqueous solution of each washing liquid is applied as a shower water to the separated lithium transition metal complex oxide powder are exemplary examples.

After the washing, a step of separating the lithium transition metal complex oxide from the washing liquid by filtration or the like and drying the lithium transition metal complex oxide is carried out.

• Crushing step

In the present embodiment, it is preferable to carry out a crushing step of crushing the obtained lithium transition metal complex oxide powder. The crushing step makes it possible to control the lithium transition metal complex oxide powder to satisfy the requirements (1) and (2).

The crushing step is preferably carried out using an airflow-type pulverizer, a collision-type pulverizer equipped with a classification mechanism, a pin mill, a ball mill, a jet mill, a counter jet mill equipped with a classification rotor, or the like.

When the lithium transition metal complex oxide powder is crushed using, among these, a pin mill, it is possible to crush the aggregation between the primary particles while avoiding the pulverization of the primary particles in the lithium transition metal complex oxide powder.

In the case of carrying out the crushing step using a pin mill, crushing under a condition of a rotation speed of 5000 rpm or faster makes it possible to obtain a lithium transition metal complex oxide powder that satisfies the requirements (1) and (2). The rotation speed of the pin mill is preferably 5000 rpm or faster and more preferably 10000 rpm or faster. The rotation speed of the pin mill is preferably 25000 rpm or slower.

The crushed lithium transition metal complex oxide may be injected into the pin mill again and repeatedly crushed.

<Positive electrode active material for lithium secondary battery>

The present embodiment is a positive electrode active material for a lithium secondary battery containing the lithium metal complex oxide powder of the present invention.

<Lithium secondary battery>

Next, a positive electrode for which a lithium secondary battery positive electrode active material for which a lithium transition metal complex oxide that is produced by the present embodiment is used is used as a positive electrode active material for lithium secondary batteries and a lithium secondary battery having this positive electrode will be described while describing the configuration of the lithium secondary battery.

An example of the lithium secondary battery of the present embodiment has a positive electrode, a negative electrode, a separator that is sandwiched between the positive electrode and the negative electrode, and an electrolytic solution that is disposed between the positive electrode and the negative electrode.

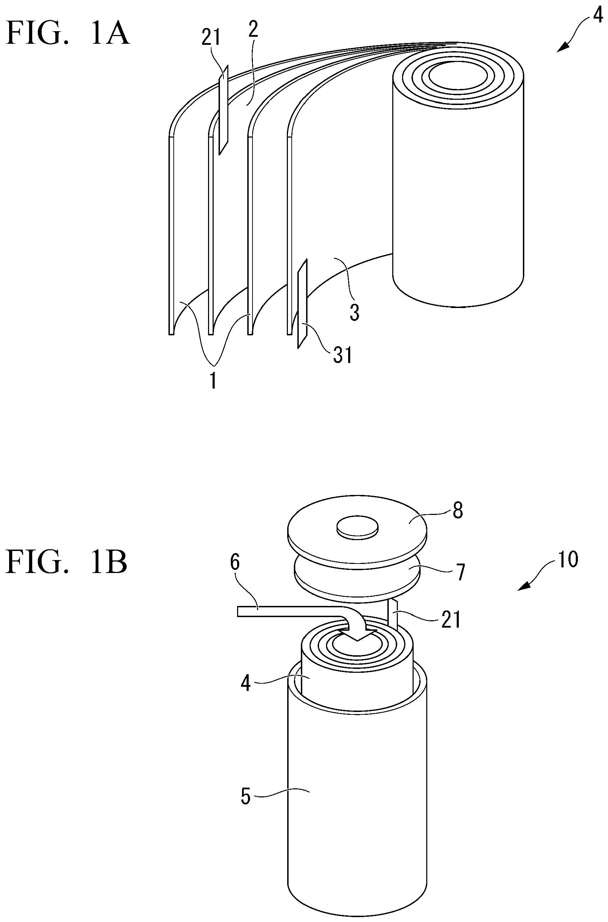

Fig. 1A and Fig. 1B are schematic views illustrating an example of the lithium secondary battery of the present embodiment. A cylindrical lithium secondary battery 10 of the present embodiment is produced as described below.

First, as shown in Fig. 1A, a pair of separators 1 having a strip shape, a strip-shaped positive electrode 2 having a positive electrode lead 21 at one end, and a strip-shaped negative electrode 3 having a negative electrode lead 31 at one end are laminated in the order of the separator 1, the positive electrode 2, the separator 1, and the negative electrode 3 and are wound to form an electrode group 4.

Next, as shown in Fig. 1B, the electrode group 4 and an insulator (not shown) are accommodated in a battery can 5, then, the can bottom is sealed, the electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, which makes it possible to produce a lithium secondary battery 10.

As the shape of the electrode group 4, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as the shape of a lithium secondary battery having such an electrode group 4, a shape that is specified by IEC60086, which is a standard for batteries specified by the International Electrotechnical Commission (IEC) or by JIS C 8500 can be adopted. Shapes such as a cylindrical shape and a square shape can be exemplary examples.

Furthermore, the lithium secondary battery is not limited to the winding-type configuration and may have a lamination-type configuration in which the laminated structure of the positive electrode, the separator, the negative electrode, and the separator is repeatedly overlaid. As the lamination-type lithium secondary battery, it is possible to exemplify a so-called coin-type battery, a button-type battery, and a paper-type (or sheet-type) battery.

Hereinafter, each configuration will be described in order.

(Positive electrode)

The positive electrode of the present embodiment can be produced by, first, adjusting a positive electrode mixture containing a positive electrode active material, a conductive material, and a binder and supporting the positive electrode mixture by a positive electrode current collector.

(Conductive material)

As the conductive material in the positive electrode of the present embodiment, a carbon material can be used. As the carbon material, graphite powder, carbon black (for example, acetylene black), a fibrous carbon material, and the like can be exemplary examples. Since carbon black is fine particles and has a large surface area, the addition of a small amount of carbon black to the positive electrode mixture enhances the conductive property in the positive electrode and makes it possible to improve the charge and discharge efficiency and the output characteristics. However, when an excess of carbon black is added, both the binding force between the positive electrode mixture and the positive electrode current collector attributed to the binder and the binding force inside the positive electrode mixture deteriorate, which, conversely, acts as a cause for an increase in the internal resistance.

The fraction of the conductive material in the positive electrode mixture is preferably 5 parts by mass or more and 20 parts by mass or less with respect to 100 parts by mass of the positive electrode active material. In the case of using a fibrous carbon material such as a graphitized carbon fiber or a carbon nanotube as the conductive material, it is also possible to decrease the fraction.

(Binder)

As the binder in the positive electrode of the present embodiment, a thermoplastic resin can be used.

As the thermoplastic resin, fluororesins such as polyvinylidene fluoride (hereinafter, referred to as PVdF in some cases), polytetrafluoroethylene (hereinafter, referred to as PTFE in some cases), tetrafluoroethylene-hexafluoropropylene-vinylidene fluoride-based copolymers, hexafluoropropylene-vinylidene fluoride-based copolymers, and tetrafluoroethylene-perfluorovinyl ether-based copolymers; and polyolefin resins such as polyethylene and polypropylene can be exemplary examples.

Two or more of these thermoplastic resins may be used in a mixture form. When a fluororesin and a polyolefin resin are used as the binder, the fraction of the fluororesin in the entire positive electrode mixture is set to 1 mass% or more and 10 mass% or less, and the fraction of the polyolefin resin is set to 0.1 mass% or more and 2 mass% or less, it is possible to obtain a positive electrode mixture having both a high adhesive force to the positive electrode current collector and a high bonding force in the positive electrode mixture.

(Positive electrode current collector)

As the positive electrode current collector in the positive electrode of the present embodiment, a strip-shaped member formed of a metal material such as Al, Ni, or stainless steel as a forming member can be used. Particularly, a positive electrode current collector that is formed of Al and has a thin film shape is preferable since the positive electrode current collector is easy to process and inexpensive.

As the method for supporting the positive electrode mixture by the positive electrode current collector, a method in which the positive electrode mixture is formed by pressurization on the positive electrode current collector is an exemplary example. In addition, the positive electrode mixture may be supported by the positive electrode current collector by preparing a paste of the positive electrode mixture using an organic solvent, applying and drying the paste of the positive electrode mixture to be obtained on at least one surface side of the positive electrode current collector, and fixing the positive electrode mixture by pressing.

As the organic solvent that can be used in the case of preparing the paste of the positive electrode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone (hereinafter, referred to as NMP in some cases) are exemplary examples.

As the method for applying the paste of the positive electrode mixture to the positive electrode current collector, a slit die coating method, a screen coating method, a curtain coating method, a knife coating method, a gravure coating method, and an electrostatic spraying method are exemplary examples.

The positive electrode can be produced by the method exemplified above.

(Negative electrode)

The negative electrode in the lithium secondary battery of the present embodiment preferably can be doped with a lithium ion and discharge the lithium ion at a lower potential than the positive electrode, and an electrode formed by supporting a negative electrode mixture containing a negative electrode active material by a negative electrode current collector and an electrode formed of a negative electrode active material alone can be exemplary examples.

(Negative electrode active material)

As the negative electrode active material in the negative electrode, materials that are a carbon material, a chalcogen compound (oxide, sulfide, or the like), a nitride, a metal, or an alloy and can be doped with a lithium ion and discharge the lithium ion at a lower potential than the positive electrode are exemplary examples.

As the carbon material that can be used as the negative electrode active material, graphite such as natural graphite and artificial graphite, cokes, carbon black, pyrolytic carbons, carbon fibers, and organic polymer compound-**calcined** bodies are exemplary examples.

As the oxide that can be used as the negative electrode active material, oxides of silicon represented by a formula $SiO_x$ (here, x is a positive real number) such as $SiO_2$ and $SiO$; oxides of titanium represented by a formula $TiO_x$ (here, x is a positive real number) such as $TiO_2$ and $TiO$; oxides of vanadium represented by a formula $VO_x$ (here, x is a positive real number) such as $V_2O_5$ and $VO_2$; oxides of iron represented by a formula $FeO_x$ (here, x is a positive real

number) such as $Fe_3O_4$, $Fe_2O_3$, and FeO; oxides of tin represented by a formula $SnO_x$ (here, x is a positive real number) such as $SnO_2$ and SnO; oxides of tungsten represented by a general formula $WO_x$ (here, x is a positive real number) such as $WO_3$ and $WO_2$; and composite metal oxides containing lithium and titanium or vanadium such as $Li_4Ti_5O_{12}$ and $LiVO_2$ can be exemplary examples.

As the sulfide that can be used as the negative electrode active material, sulfides of titanium represented by a formula $TiS_x$ (here, x is a positive real number) such as $Ti_2S_3$, $TiS_2$, and TiS; sulfides of vanadium represented by a formula $VS_x$ (here, x is a positive real number) such $V_3S_4$, $VS_2$, and VS; sulfides of iron represented by a formula $FeS_x$ (here, x is a positive real number) such as $Fe_3S_4$, $FeS_2$, and FeS; sulfides of molybdenum represented by a formula $MoS_x$ (here, x is a positive real number) such as $Mo_2S_3$ and $MoS_2$; sulfides of tin represented by a formula $SnS_x$ (here, x is a positive real number) such as $SnS_2$ and SnS; sulfides of tungsten represented by a formula $WS_x$ (here, x is a positive real number) such as $WS_2$; sulfides of antimony represented by a formula $SbS_x$ (here, x is a positive real number) such as $Sb_2S_3$; and sulfides of selenium represented by a formula $SeS_x$ (here, x is a positive real number) such as $Se_5S_3$, $SeS_2$, and SeS can be exemplary examples.

As the nitride that can be used as the negative electrode active material, lithium-containing nitrides such as $Li_3N$ and $Li_{3-x}A_xN$ (here, A is any one or both of Ni and Co, and $0 < x < 3$) can be exemplary examples.

These carbon materials, oxides, sulfides, and nitrides may be used singly or two or more kinds thereof may be jointly used. In addition, these carbon materials, oxides, sulfides, and nitrides may be crystalline or amorphous.

In addition, as the metal that can be used as the negative electrode active material, lithium metal, silicon metal, tin metal, and the like can be exemplary examples.

As the alloy that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can be exemplary examples.

These metals and alloys can be used as an electrode, mainly, singly after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from a uncharged state to a fully-charged state during charging, the average discharging potential is low, the capacity retention rate at the time of repeatedly charging and discharging the lithium secondary battery is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, a thermoplastic resin can be an exemplary example, and specifically, PVdF, thermoplastic polyimide, carboxymethylcellulose, polyethylene, and polypropylene can be exemplary examples.

(Negative electrode current collector)

As the negative electrode current collector in the negative electrode, a strip-shaped member formed of a metal material such as Cu, Ni, or stainless steel as the forming material can be an exemplary example. Particularly, a negative electrode current collector that is formed of Cu and has a thin film shape is preferable since the negative electrode current collector does not easily produce an alloy with lithium and is easy to process.

As the method for supporting the negative electrode mixture by the negative electrode current collector, similarly to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery of the present embodiment, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials.

In the present embodiment, the air resistance of the separator by the Gurley method specified by JIS P 8117 is preferably 50 sec/100 cc or more and 300 sec/100 cc or less and more preferably 50 sec/100 cc or more and 200 sec/100 cc or less in order to favorably permeate the electrolyte while the battery is in use (while the battery is being charged and discharged).

In addition, the porosity of the separator is preferably 30 vol% or more and 80 vol% or less and more preferably 40 vol% or more and 70 vol% or less. The separator may be a laminate of separators having different porosities.

(Electrolytic solution)

The electrolytic solution in the lithium secondary battery of the present embodiment contains an electrolyte and an organic solvent.

As the electrolyte that is contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB represents bis(oxalato)borate), LiFSI (here, FSI represents bis(fluorosulfonyl)imide), lower aliphatic carboxylic acid lithium salts, and $LiAlCl_4$ are exemplary examples, and a mixture of two or more of these electrolytes may be used. Among these, an electrolyte containing at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$ that contain fluorine is preferably used as the electrolyte.

In addition, as the organic solvent that is contained in the electrolytic solution, it is possible to use, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; **esters such as methyl formate, methyl acetate, and** $\gamma$-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, and 1,3-propanesultone, or these organic solvents into which a fluoro group is further introduced (the organic solvents in which one or more hydrogen atoms in the organic solvent are substituted with a fluorine atom).

As the organic solvent, two or more of the above-described organic solvents are preferably used in a mixture form. Among these, a solvent mixture containing a carbonate is preferable, and a solvent mixture of a cyclic carbonate and a non-cyclic carbonate and a solvent mixture of a cyclic carbonate and an ether are still more preferable. As the solvent mixture of a cyclic carbonate and a non-cyclic carbonate, a solvent mixture containing ethylene carbonate, dimethyl carbonate, and ethyl methyl carbonate is preferable. The electrolytic solution for which such a solvent mixture is used has a number of features as follows: the electrolytic solution has a broad operating temperature range, does not easily deteriorate even when the lithium secondary battery is charged and discharged at a high current rate, does not easily deteriorate even after used for a long period of time, and does not easily dissolve even in a case where a graphite material such as natural graphite or artificial graphite is used as an active material for the negative electrode.

In addition, as the electrolytic solution, it is preferable to use an electrolytic solution containing a lithium salt containing fluorine such as $LiPF_6$ and an organic solvent having a fluorine substituent since the safety of lithium secondary batteries to be obtained is enhanced. A solvent mixture containing an ether having a fluorine substituent such as pentafluoropropyl methyl ether or 2,2,3,3-tetrafluoropropyl difluoromethyl ether and dimethyl carbonate is still more preferable since the capacity retention rate is high even when the lithium secondary battery is charged and discharged at a high current rate.

A solid electrolyte may be used instead of the electrolytic solution. As the solid electrolyte, it is possible to use, for example, an organic polymer electrolyte such as a polyethylene oxide-based polymer compound or a polymer compound containing at least one or more of a polyorganosiloxane chain or a polyoxyalkylene chain. In addition, it is also possible to use a so-called gel-type solid electrolyte in which a nonaqueous electrolytic solution is held in a polymer compound. In addition, inorganic solid electrolytes containing a sulfide such as $Li_2S-SiS_2$, $Li_2S-GeS_2$, $Li_2S-P_2S_5$, $Li_2S-B_2S3$, $Li_2S-SiS_2-Li_3PO_4$, $Li_2S-SiS_2-Li_2SO_4$, and $Li_2S-GeS_2-P_2S_5$ are exemplary examples, and a mixture or two or more thereof may be used. There is a case where the use of these solid electrolytes further enhances the safety of the lithium secondary battery.

In addition, in a case where the solid electrolyte is used in the lithium secondary battery of the present embodiment, there is also a case where the solid electrolyte plays a role of the separator, and in such a case, the separator is not required in some cases.

Since the lithium transition metal complex oxide that is produced by the above-described present embodiment is used in the positive electrode active material having the above-described configuration, it is possible to improve the discharge rate characteristics and the cycle characteristics of the lithium secondary battery for which the positive electrode active material is used.

In addition, since the positive electrode having the above-described configuration has the positive electrode active material for lithium secondary batteries having the above-described configuration, it is possible to improve the discharge rate characteristics and the cycle characteristics of the lithium secondary battery.

Furthermore, the lithium secondary battery having the above-described configuration has the above-described positive electrode, which makes it possible to improve the discharge rate characteristics and the cycle characteristics.

Another aspect of the present invention includes the following inventions (1) to (6).

(1) A lithium transition metal complex oxide powder, in which the following requirements (1) and (2) are satisfied, the following formula (I) is satisfied,

a BET specific surface area is 0.1 $m^2/g$ or more and 2.0 $m^2/g$ or less,
an average particle diameter ($D_{50}$) in particle size distribution measurement is 1 $\mu$m or more and 5 $\mu$m or less,
a tapped density is 1.0 $g/cm^3$ or more and 1.6 $g/cm^3$, and
an average primary particle diameter is 1.0 $\mu$m or more and 3.0 $\mu$m or less.

Requirement (1): When a press density obtained by compressing the lithium transition metal complex oxide powder at a pressure of 45 MPa is defined as A and a tapped density of the lithium transition metal complex oxide powder is defined as B, A/B that is a ratio between A and B is 1.8 or more and 3.5 or less.
Requirement (2): A, which is the press density, is more than 2.7 $g/cm^3$ and 3.6 $g/cm^3$ or less.

$$Li[Li_x(Ni_{(1-y-z-w)}Co_yMn_zM_w)_{1-x}]O_2 \ ... \qquad (I)$$

(Here, $-0.1 \leq x \leq 0.2$, $0 \leq y \leq 0.4$, $0 \leq z \leq 0.4$, $0 \leq w \leq 0.1$, and $y + z + w < 1$ are satisfied, and M represents one or more elements selected from the group consisting of Fe, Cu, Ti, Mg, Al, W, B, Mo, Nb, Zn, Sn, Zr, Ga, La, and V.)

(2) The lithium transition metal complex oxide powder according to (1), in which an average particle diameter ($D_{50}$) in particle size distribution measurement is 1 **$\mu$m or more and 5 $\mu$m or less.**
(3) A nickel-containing transition metal complex hydroxide powder, in which the following requirements (S) and (T) are satisfied, the following formula (II) that represents mole **ratios** of metal elements is satisfied, and, in the following formula (II), $0 \leq $ **a** $ \leq$ **0.4, 0** $\leq$ **b** $\leq$ **0.4, and 0** $\leq$ **c** $\leq$ **0.1** are satisfied.

Requirement (S): When a press density obtained by compressing the nickel-containing transition metal complex hydroxide powder at a pressure of 45 MPa is defined as X and a tapped density of the nickel-containing transition metal complex hydroxide powder is defined as Y, X/Y that is a ratio between X and Y is 1.6 or more and 2.5 or less.
Requirement (T): X, which is the press density, is more than 1.8 $g/cm^3$ and 2.7 $g/cm^3$ or less.

$$Ni : Co : Mn : M^1 = (1 - a - b - c) : a : b : c \ ... \qquad (II)$$

(Here, $M^1$ is one or more elements selected from the group consisting of Fe, Cu, Ti, Mg, Al, W, B, Mo, Nb, Zn, Sn, Zr, Ga, La, and V.)

(4) A positive electrode active material for a lithium secondary battery, containing the lithium transition metal complex oxide powder according to (1) or (2).
(5) A positive electrode for a lithium secondary battery, containing the positive electrode active material for a lithium secondary battery according to (4).
(6) A lithium secondary battery having the positive electrode for a lithium secondary battery according to (5).

**[Examples]**

Next, the present invention will be described in more detail using examples.

«Method for measuring press density»

A press density was measured using a press density measuring instrument 40 shown in Fig. 2.
First, a jig 42 was fitted into a jig 41, and a powder X (3 g) that was a measurement object was loaded into an internal space 41a in a state in which a flange portion 422 is in contact with the jig 41. Next, a jig 43 was fitted into the jig 41, and the tip of a plug portion 431 was brought into contact with the powder X.
Next, a load F was applied to the jig 43 using a pressing machine to apply pressure to the powder X in the internal space 41a through the jig 43.
Since the area of a contact surface 43A in which the jig 43 came into contact with the powder X was 177 $mm^2$, the load F was set to 8 kN. The load F was applied for one minute.
After stopping and removing the load, the length of a gap Lx between the jig 43 and the jig 41 was measured.

The thickness of the powder X was calculated from the following formula (PI).

$$\text{Thickness of powder X (mm)} = L_B + L_x - L_A - L_C \ldots \text{(P1)}$$

In the formula (P1), $L_B$ is the height of the cylindrical jig 41. $L_x$ is the length of the gap between the jig 41 and the jig 43. $L_A$ is the height of the plug portion 431 of the jig 43. $L_C$ is the height of the plug portion 421 of the jig 42.
From the obtained thickness of the powder X, the press density was calculated from the following formula (P2).

$$\text{Press density} = \text{powder mass} \div \text{powder volume} \ldots \text{(P2)}$$

In the formula (P2), the powder mass is the mass (g) of the powder X loaded into in the density measuring instrument 40 shown in Fig. 2.
In the formula (P2), the powder volume is the product of the thickness (mm) of the powder X calculated from the formula (PI) and the area of the contact surface 43A in which the jig 43 comes into contact with the powder X.
The press density (A) was calculated using a lithium transition metal complex oxide powder that was obtained by a method described below as the powder X. The press density (X) was calculated using a nickel-containing transition metal complex hydroxide powder that was obtained by a method described below as the powder X.

«Measurement of tapped density»

The tapped density was measured by the method described in JIS R 1628-1997.

«Ratio of press density to tapped density»

The ratio between the press density and the tapped density, which were measured by the above-**described method, was obtained. In Table 1 below, "A" means the press density of the lithium transition metal complex oxide powder. "B" means the tapped density of the lithium transition metal complex oxide powder. "A/B" means the** ratio between the press density of the lithium transition metal complex oxide powder and the tapped density of the lithium transition metal complex oxide powder. In Table 3 below, **"X" means the press density of the nickel-containing transition metal complex hydroxide powder. "Y" means the tapped density of the nickel-containing transition metal complex hydroxide powder. "X/Y" means the ratio between the press density of** the nickel-containing transition metal complex hydroxide powder and the tapped density of the nickel-containing transition metal complex hydroxide powder.

«Composition analysis»

The composition analysis of a lithium transition metal complex oxide powder or nickel transition metal complex hydroxide powder that was produced by a method described below was carried out using an inductively coupled plasma emission spectrometer (manufactured by SII NanoTechnology Inc., SPS 3000) after dissolving the obtained powder in hydrochloric acid.

«Measurement of average primary particle diameter»

The lithium transition metal complex oxide powder was placed on a conductive sheet attached onto a sample stage and observed with a scanning electron microscope (SEM, JSM-5510 manufactured by JEOL Ltd.) while being irradiated with an electron beam at an accelerating voltage of 20 kV. Fifty primary particles were randomly extracted from an image obtained by the SEM observation at a magnification of 5000 times (SEM photograph), for each of the primary particles, the distance between parallel lines that were drawn in a certain direction to sandwich the projected image of the primary particle (constant direction diameter) was measured as the particle diameter of the primary particle. The arithmetic average value of the obtained particle diameters of the primary particles is regarded as the average primary particle diameter of the lithium transition metal complex oxide powder.

«Measurement of BET specific surface area»

The BET specific surface area was measured using a BET specific surface area measuring instrument (Macsorb (registered trademark) manufactured by Mountech Co., Ltd.) after drying the lithium transition metal complex oxide powder (1 g) in a nitrogen atmosphere at 105°C for 30 minutes.

«Measurement of average particle diameter»

Using a laser diffraction particle size distribution meter (for example, manufactured by HORIBA, Ltd., model number: LA-950), the lithium transition metal complex oxide or nickel transition metal complex hydroxide (0.1 g) was injected into a 0.2 mass% sodium hexametaphosphate aqueous solution (50 ml) to obtain a dispersion liquid in which the powder was disperse. The particle size distribution of the obtained dispersion liquid is measured, and a volume-based cumulative particle size distribution curve is obtained. In the obtained cumulative particle size distribution curve, the value of the particle size ($D_{50}$) seen from the fine particle side at the 50% cumulative particle size is regarded as the average particle diameter of the lithium transition metal complex oxide.

<Production of lithium secondary battery positive electrode>

A paste-form positive electrode mixture was prepared by adding a lithium transition metal complex oxide obtained by a production method described below, a conductive material (acetylene black), and a binder (PVdF) so as to obtain a composition of the lithium transition metal complex oxide, the conductive material, and the binder in a mass ratio of 92:5:3 and kneading the components. At the time of preparing the positive electrode mixture, N-methyl-2-pyrrolidone was used as an organic solvent.

The obtained positive electrode mixture was applied to an Al foil having a **thickness of 40 $\mu$m, which was to serve as a current collector, and dried in a vacuum at** 150°C for eight hours, thereby obtaining a lithium secondary battery positive electrode. The electrode area of the lithium secondary battery positive electrode was set to 1.65 cm$^2$.

<Production of lithium secondary battery (coin-type half cell)>

The following operation was carried out in a glove box under an argon atmosphere.

The lithium secondary battery positive electrode produced in the section <Production of lithium secondary battery positive electrode> was placed on the lower lid of a part for a coin-type battery R2032 (manufactured by Hohsen Corp.) with the aluminum foil surface facing downward, and a separator (polyethylene porous film) was placed on the lithium secondary battery positive electrode. An electrolytic solution (300 $\mu$l) was poured thereinto. As the electrolytic solution, LiPF$_6$ dissolved in a liquid mixture of ethylene carbonate (hereinafter, referred to as EC in some cases), dimethyl carbonate (hereinafter, referred to as DMC in some cases), and ethyl methyl carbonate (hereinafter, referred to as EMC in some cases) at a volume ratio of 30:35:35 to a concentration of 1.0 mol/l (hereinafter, expressed as LiPF$_6$/EC + DMC + EMC) was used.

Next, metallic lithium was used as a negative electrode, and the negative electrode was placed on the upper side of the laminated film separator. An upper lid was placed through a gasket and caulked using a caulking machine, thereby producing a lithium secondary battery (coin-type half cell R2032; hereinafter, referred to as the "half cell" in some cases).

• Charge and discharge test

After initial charging and discharging using the half cell produced by the above-described method, a discharge rate test and a cycle test were carried out, and the discharge rate characteristics and the cycle characteristics were evaluated.

As the initial charging and discharging, constant current constant voltage charging and constant current discharge were carried out at a test temperature of 25°C at a current of 0.2 CA for both the charging and the discharging. In the case of 1 - y - z - **w $\geq$ 0.8 in the composition formula (I), the maximum charging voltage was set to 4.35 V** and the minimum discharging voltage was set to 2.8 V. In the case of 1 - y - z - w < 0.8 in the composition formula (I), the maximum charging voltage was set to 4.3 V and the minimum discharging voltage was set to 2.5 V.

· · Discharge rate test

(In case of 1 - y - z - **w $\geq$ 0.8 in composition formula (I))**

Test temperature: 25°C
Maximum charging voltage: 4.35 V, charging current: 1 CA, constant current constant voltage charging

Minimum discharging voltage: 2.8 V, discharging current: 0.2 CA or 10 CA, constant current discharging

(In case of 1 - y - z - w < 0.8 in composition formula (I))

Test temperature: 25°C
Maximum charging voltage: 4.3 V, charging current: 1 CA, constant current constant voltage charging
Minimum discharging voltage: 2.5 V, discharging current: 0.2 CA or 10 CA, constant current discharging

A 10CA/0.2 CA discharge capacity ratio was obtained using the discharge capacity at the time of constant current discharging the lithium secondary battery at 0.2 CA and the discharge capacity at the time of constant current discharging the lithium secondary battery at 10 CA from the following formula and used as an index for the discharge rate characteristics. The higher the 10CA/0.2CA discharge capacity ratio, the higher the discharge rate characteristic, and the higher output the lithium secondary battery exhibits.

$$\cdot\cdot \; 10CA/0.2CA \; discharge \; capacity \; ratio$$

$$10CA/0.2CA \; discharge \; capacity \; ratio \; (\%)$$

$$= discharge \; capacity \; at \; 10 \; CA/discharge \; capacity \; at \; 0.2 \; CA \; x \; 100$$

After the discharge rate test, a cycle test was carried out. A charge and discharge cycle was repeated 50 times under the conditions described below.

·· Cycle test

(In case of 1 - y - z - **w ≥ 0.8 in composition formula (I))**

Test temperature: 25°C
Maximum charging voltage: 4.35 V, charging current: 0.5 CA, constant current constant voltage charging
Minimum discharging voltage: 2.8V, discharging current: 1CA, constant current discharging (in the case of 1 - y - z - w < 0.8 in the composition formula (I))
Test temperature: 25°C
Maximum charging voltage: 4.3 V, charging current: 1 CA, constant current constant voltage charging
Minimum discharging voltage: 2.5 V, discharging current: 1 CA, constant current discharging

The discharge capacity in the first cycle was regarded as the cycle initial capacity, a value obtained by dividing the discharge capacity in the 50th cycle by the cycle initial capacity was calculated, and this value was regarded as the cycle retention rate.

[Example 1-1]

• Production of lithium transition metal complex oxide 1

After water was poured into a reaction vessel including a stirrer and an overflow pipe, a sodium hydroxide aqueous solution was added thereto, and nitrogen gas was introduced into the reaction vessel. The liquid temperature in the reaction vessel was held at 70°C.
A nickel sulfate aqueous solution, a cobalt sulfate aqueous solution, and a manganese sulfate aqueous solution were mixed together such that the atomic ratio of nickel atoms, cobalt atoms, and manganese atoms reached 0.88:0.08:0.04, thereby adjusting a liquid raw material mixture 1.
Next, the raw material mixture solution 1 and an ammonium sulfate aqueous solution, as a complexing agent, were continuously added into the reaction vessel under stirring. A sodium hydroxide aqueous solution was timely added dropwise such that the pH of the solution in the reaction vessel reached 11.4 (value measured at a liquid temperature of the aqueous solution of 40°C). A nickel-containing transition metal complex hydroxide was obtained, washed, then, dehydrated with a centrifuge, washed, dehydrated, isolated, and dried at 105°C, thereby obtaining a nickel-containing transition metal complex hydroxide 1. The nickel-containing transition metal complex hydroxide 1 had an average part**icle diameter of 16.7 μm and a tapped density of 2.1 g/cm³.**

The nickel-containing transition metal complex hydroxide 1 was injected into a counter jet mill with the pulverization gas pressure set to 0.6 MPa and pulverized, thereby obtaining a nickel-containing transition metal complex hydroxide 2. The nickel-containing transition metal complex hydroxide 2 had an average particle diameter of 1.7 μm, a tapped density of 1.0 g/cm³, and a press density of 2.0 g/cm³.

The nickel-containing transition metal complex hydroxide 2, a lithium hydroxide monohydrate powder, and a potassium sulfate powder were weighed and mixed together such that Li/(Ni + Co + Mn) reached 1.15 (mol/mol) and $K_2SO_4$/(LiOH + $K_2SO_4$) reached 0.1 (mol/mol).

After that, the mixture was **calcined** at 790°C for 10 hours in an oxygen atmosphere to obtain a lithium transition metal complex oxide powder. The obtained lithium transition metal complex oxide powder and pure water having a liquid temperature adjusted to 5°C were mixed together such that the ratio between the weight of the lithium transition metal complex oxide and the total amount reached 0.3, and the produced slurry was stirred for 20 minutes and then dehydrated. Furthermore, the slurry was washed with a shower water that weighed double the lithium transition metal complex oxide using pure water adjusted to a liquid temperature of 5°C, then, dehydrated, and dried at 150°C. After dried, the slurry was injected into a pin mill operated at a rotation speed of 10000 rpm and crushed, thereby obtaining a lithium transition metal complex oxide 1. As a result of the composition analysis of the lithium transition metal complex oxide 1, x = 0.01, y = 0.08, z = 0.04, w = 0 in the composition formula (I).

[Example 1-2]

• Production of lithium transition metal complex oxide 2

The nickel-containing transition metal complex hydroxide 2 obtained in the process of Example 1-1, a lithium hydroxide monohydrate powder, and a potassium sulfate powder were weighed and mixed together such that Li/(Ni + Co + Mn) reached 1.26 (mol/mol) and $K_2SO_4$/(LiOH + $K_2SO_4$) reached 0.1 (mol/mol).

After that, the mixture was calcined at 790°C for 10 hours in an oxygen atmosphere to obtain a lithium transition metal complex oxide powder. The lithium transition metal complex oxide powder and pure water having a liquid temperature adjusted to 5°C were mixed together such that the ratio between the weight of the lithium transition metal complex oxide powder and the total amount reached 0.3, and the produced slurry was stirred for 20 minutes and then dehydrated. Furthermore, the slurry was washed with a shower water that weighed double the above-described powder using pure water adjusted to a liquid temperature of 5°C, then, dehydrated, and dried at 150°C. After dried, the slurry was injected into a pin mill operated at a rotation speed of 10000 rpm and crushed, thereby obtaining a lithium transition metal complex oxide 2. As a result of the composition analysis of the lithium transition metal complex oxide 2, x = 0.02, y = 0.08, z = 0.04, w = 0 in the composition formula (I).

[Example 1-3]

• Production of lithium transition metal complex oxide 3

The nickel-containing transition metal complex hydroxide 2 obtained in the process of Example 1-1, a lithium hydroxide monohydrate powder, and a potassium sulfate powder were weighed and mixed together such that Li/(Ni + Co + Mn) reached 1.26 (mol/mol) and $K_2SO_4$/(LiOH + $K_2SO_4$) reached 0.1 (mol/mol).

After that, the mixture was **calcined** at 820°C for 10 hours in an oxygen atmosphere to obtain a lithium transition metal complex oxide powder. The lithium transition metal complex oxide powder and pure water having a liquid temperature adjusted to 5°C were mixed together such that the ratio between the weight of the lithium transition metal complex oxide powder and the total amount reached 0.3, and the produced slurry was stirred for 20 minutes and then dehydrated. Furthermore, the slurry was washed with a shower water that weighed double the above-described powder using pure water adjusted to a liquid temperature of 5°C, then, dehydrated, and dried at 150°C. After dried, the slurry was injected into a pin mill operated at a rotation speed of 10000 rpm and crushed, thereby obtaining a lithium transition metal complex oxide 3. As a result of the composition analysis of the lithium transition metal complex oxide 3, x = 0.02, y = 0.08, z = 0.04, w = 0 in the composition formula (I).

[Comparative Example 1]

• Production of lithium transition metal complex oxide 4

After water was poured into a reaction vessel including a stirrer and an overflow pipe, a sodium hydroxide aqueous solution was added thereto, and nitrogen gas was introduced into the reaction vessel. The liquid temperature in the reaction vessel was held at 50°C.
Similar to Example 1-1, a nickel sulfate aqueous solution, a cobalt sulfate aqueous solution, and a manganese sulfate aqueous solution were mixed together such that the atomic ratio of nickel atoms, cobalt atoms, and manganese atoms reached 0.88:0.08:0.04, thereby adjusting a liquid raw material mixture 1.
Next, the raw material mixture solution 1 and an ammonium sulfate aqueous solution, as a complexing agent, were continuously added into the reaction vessel under stirring. A sodium hydroxide aqueous solution was timely added dropwise such that the pH of the solution in the reaction vessel reached 12.4 (value measured at a liquid temperature of the aqueous solution of 40°C) to obtain a nickel-containing transition metal complex hydroxide, and the nickel-containing complex metal hydroxide was washed, then, dehydrated with a centrifuge, washed, dehydrated, isolated, and dried at 105°C, thereby obtaining a nickel-containing transition metal complex hydroxide 3. The nickel-containing transition metal complex hydroxide 3 had an average particle **diameter of 3.3 $\mu$m, a tapped density of 1.5 g/cm$^3$**, and a press density of 2.0 g/cm$^3$.
The nickel-containing transition metal complex hydroxide 3 and a lithium hydroxide monohydrate powder were weighed and mixed together such that Li/(Ni + Co + Mn) reached 1.10 (mol/mol).
After that, the mixture was **calcined** at 760°C for six hours in an oxygen atmosphere to obtain a lithium transition metal complex oxide powder. The lithium transition metal complex oxide powder and pure water having a liquid temperature adjusted to 5°C were mixed together such that the ratio between the weight of the lithium transition metal complex oxide powder and the total amount reached 0.3, and the produced slurry was stirred for 20 minutes, then, dehydrated, and dried at 150°C, thereby obtaining a lithium transition metal complex oxide 4. As a result of the composition analysis of the lithium transition metal complex oxide 4, x = 0.01, y = 0.08, z = 0.04, w = 0 in the composition formula (I).

[Example 2-1]

• Production of lithium transition metal complex oxide 5

After water was poured into a reaction vessel including a stirrer and an overflow pipe, a sodium hydroxide aqueous solution was added thereto, and nitrogen gas was introduced into the reaction vessel. The liquid temperature in the reaction vessel was held at 50°C.
A nickel sulfate aqueous solution, a cobalt sulfate aqueous solution, and a manganese sulfate aqueous solution were mixed together such that the atomic ratio of nickel atoms, cobalt atoms, and manganese atoms reached 0.91:0.07:0.02, thereby adjusting a liquid raw material mixture 2.
Next, the raw material mixture solution 2 and an ammonium sulfate aqueous solution, as a complexing agent, were continuously added into the reaction vessel under stirring. A sodium hydroxide aqueous solution was timely added dropwise such that the pH of the solution in the reaction vessel reached 12.5 (value measured at a liquid temperature of the aqueous solution of 40°C), and a nickel-containing transition metal complex hydroxide was obtained.
After that, the nickel-containing transition metal complex hydroxide was washed, dehydrated with a centrifuge, further washed and dehydrated, and then isolated.
After that, the nickel-containing transition metal complex hydroxide was dried at 105°C, thereby obtaining a nickel-containing transition metal complex hydroxide 4. The nickel-containing transition metal complex hydroxide 4 had an average particle **diameter of 2.9 $\mu$m**, a tapped density of 1.5 g/cm$^3$, and a press density of 2.1 g/cm$^3$.
The nickel-containing transition metal complex hydroxide 4 was injected into a jet mill with the pulverization gas pressure set to 0.8 MPa and pulverized, thereby obtaining a nickel-containing transition metal complex hydroxide 5. The nickel-containing transition metal complex hydroxide 5 had an average particle diameter of 1.9 $\mu$m, **a tapped density of 1.4 g/cm$^3$**, and a press density of 2.1 g/cm$^3$.
The nickel-containing transition metal complex hydroxide 5, a lithium hydroxide monohydrate powder, and a potassium sulfate powder were weighed and mixed together such that Li/(Ni + Co + Mn) reached 1.26 (mol/mol) and $K_2SO_4/(LiOH + K_2SO_4)$ reached 0.1 (mol/mol).
After that, the mixture was **calcined** at 790°C for 10 hours in an oxygen atmosphere to obtain a lithium transition metal complex oxide powder. The lithium transition metal complex oxide powder and pure water having a liquid temperature adjusted to 5°C were mixed together such that the ratio between the weight of the lithium transition metal complex oxide powder and the total amount reached 0.3, and the produced slurry was stirred for 20 minutes and then dehydrated. Furthermore, the slurry that weighed double the lithium transition metal complex oxide powder was added as a shower water using pure water adjusted to a liquid temperature of 5°C, then, dehydrated, and dried at 150°C. After dried, the slurry was injected into a pin mill operated at a rotation speed of 10000 rpm and crushed, thereby obtaining a lithium transition metal complex oxide 5. As a result of the composition analysis of the lithium transition metal complex oxide 5, x = 0.01, y = 0.07, z = 0.02, w = 0 in the composition formula (I).

[Example 2-2]

. Production of lithium transition metal complex oxide 6

The nickel-containing transition metal complex hydroxide 4 obtained in the process of Example 2-1, a lithium hydroxide monohydrate powder, and a potassium sulfate powder were weighed and mixed together such that Li/(Ni + Co + Mn) reached 1.26 (mol/mol) and $K_2SO_4$/(LiOH + $K_2SO_4$) reached 0.1 (mol/mol).

After that, the mixture was **calcined** at 790°C for 10 hours in an oxygen atmosphere to obtain a lithium transition metal complex oxide powder. The lithium transition metal complex oxide powder and pure water having a liquid temperature adjusted to 5°C were mixed together such that the ratio between the weight of the lithium transition metal complex oxide powder and the total amount reached 0.3, and the produced slurry was stirred for 20 minutes and then dehydrated. Furthermore, the slurry that weighed double the lithium transition metal complex oxide powder was added as a shower water using pure water adjusted to a liquid temperature of 5°C, then, dehydrated, and dried at 150°C. After dried, the slurry was injected into a pin mill operated at a rotation speed of 10000 rpm and crushed, thereby obtaining a lithium transition metal complex oxide 6. As a result of the composition analysis of the lithium transition metal complex oxide 6, x = 0.02, y = 0.07, z = 0.02, w = 0 in the composition formula (I).

[Comparative Example 2]

• Production of lithium transition metal complex oxide 7

The nickel-containing transition metal complex hydroxide 4 obtained in the process of Example 2-1 and a lithium hydroxide monohydrate powder were weighed and mixed together such that Li/(Ni + Co + Mn) reached 1.10 (mol/mol).

After that, the mixture was **calcined** at 760°C for six hours in an oxygen atmosphere to obtain a lithium transition metal complex oxide powder. The lithium transition metal complex oxide powder and pure water having a liquid temperature adjusted to 5°C were mixed together such that the ratio between the weight of the lithium transition metal complex oxide powder and the total amount reached 0.3, and the produced slurry was stirred for 20 minutes, then, dehydrated, and dried at 150°C, thereby obtaining a lithium transition metal complex oxide 7. As a result of the composition analysis of the lithium transition metal complex oxide 7, x = 0.01, y = 0.07, z = 0.02, w = 0 in the composition formula (I).

[Example 3]

• Production of lithium transition metal complex oxide 8

After water was poured into a reaction vessel including a stirrer and an overflow pipe, a sodium hydroxide aqueous solution was added thereto, and nitrogen gas was introduced into the reaction vessel. The liquid temperature in the reaction vessel was held at 30°C.

A nickel sulfate aqueous solution, a cobalt sulfate aqueous solution, and a manganese sulfate aqueous solution were mixed together such that the atomic ratio of nickel atoms, cobalt atoms, and manganese atoms reached 0.50:0.20:0.30, thereby adjusting a liquid raw material mixture 3.

Next, the raw material mixture solution 3 and an ammonium sulfate aqueous solution, as a complexing agent, were continuously added into the reaction vessel under stirring. A sodium hydroxide aqueous solution was timely added dropwise such that the pH of the solution in the reaction vessel reached 11.9 (value measured at a liquid temperature of the aqueous solution of 40°C), and a nickel-containing transition metal complex hydroxide was obtained.

After that, the nickel-containing transition metal complex hydroxide was washed, dehydrated with a centrifuge, further washed and dehydrated, and isolated.

After that, the nickel-containing transition metal complex hydroxide was dried at 105°C, thereby obtaining a nickel-containing transition metal complex hydroxide 6. The nickel-containing transition metal complex hydroxide 6 had an average particle **diameter of 4.0 μm, a tapped density of 2.0 g/cm³**, and a press density of 2.2 g/cm³.

The nickel-containing transition metal complex hydroxide 6, a lithium hydroxide monohydrate powder, and a potassium sulfate powder were weighed and mixed together such that Li/(Ni + Co + Mn) reached 1.15 (mol/mol) and $K_2SO_4$/(LiOH + $K_2SO_4$) reached 0.1 (mol/mol).

After that, the mixture was **calcined** at 940°C for five hours in an oxygen atmosphere to obtain a lithium transition metal complex oxide powder. The lithium transition metal complex oxide powder and pure water having a liquid temperature adjusted to 5°C were mixed together such that the ratio between the weight of the lithium transition metal complex oxide powder and the total amount reached 0.3, and the produced slurry was stirred for 20 minutes and then dehydrated. Furthermore, the slurry was washed with a shower water that weighed double the lithium transition metal complex oxide powder using pure water adjusted to a liquid temperature of 5°C, then, dehydrated, and dried at 150°C. After dried, the slurry was injected into a pin mill operated at a rotation speed of 10000 rpm and crushed, thereby obtaining a lithium transition metal complex oxide 8. As a result of the composition analysis of the lithium transition metal complex oxide 8, $x = 0.06$, $y = 0.20$, $z = 0.30$, $w = 0$ in the composition formula (I).

[Comparative Example 3]

• Production of lithium transition metal complex oxide 9

The nickel-containing transition metal complex hydroxide 6 obtained in the process of Example 3, a lithium hydroxide monohydrate powder, and a potassium sulfate powder were weighed and mixed together such that Li/(Ni + Co + Mn) reached 1.26 (mol/mol).
After that, the mixture was **calcined** at 940°C for five hours in an oxygen atmosphere to obtain a lithium metal complex oxide powder. The lithium metal complex oxide powder and pure water having a liquid temperature adjusted to 5°C were mixed together such that the ratio between the weight of the lithium metal complex oxide powder and the total amount reached 0.3, and the produced slurry was stirred for 20 minutes and then dehydrated. Furthermore, the slurry that weighed double the lithium metal complex oxide powder was added as a shower water using pure water adjusted to a liquid temperature of 5°C, then, dehydrated, and dried at 150°C, thereby obtaining a lithium transition metal complex oxide 9.
As a result of the composition analysis of the lithium transition metal complex oxide 9, $x = 0.10$, $y = 0.20$, $z = 0.30$, $w = 0$ in the composition formula (I).
**Table 1 shows the press densities (A), the tapped densities (B), A/B's, the** average primary particle diameters, the BET specific surface areas, and the average particle diameters ($D_{50}$) of the lithium transition metal complex oxides 1 to 9 obtained in Examples 1-1 to 1-3, Comparative Example 1, Examples 2-1 and 2-2, Comparative Example 2, Example 3, and Comparative Example 3. Table 2 shows the results of the discharge rate tests and the cycle tests of the coin-type half cells for which the lithium transition metal complex oxides 1 to 9 were each used.
Table 3 shows the press densities (X), the tapped densities (Y), and the X/Y values of the nickel-containing transition metal complex hydroxides 2, 3, 4, 5, and 6 obtained in Examples 1-1 to 1-3, Comparative Example 1, Examples 2-1 and 2-2, Comparative Example 2, Example 3, and Comparative Example 3.

[Table 1]

| | Ni/Co/Mn | A (g/cm³) | B (g/cm³) | A/B | Average primary particle diameter (μm) | BET specific surface area (m²/g) | Average particle diameter $D_{50}$ (μm) |
|---|---|---|---|---|---|---|---|
| Example 1-1 | 88/8/4 | 2.9 | 1.1 | 2.6 | 0.8 | 2.0 | 2.5 |
| Example 1-2 | 88/8/4 | 2.9 | 1.1 | 2.6 | 1.1 | 2.0 | 2.2 |
| Example 1-3 | 88/8/4 | 2.9 | 1.4 | 2.1 | 1.4 | 1.2 | 3.5 |
| Comparative Example 1 | 88/8/4 | 2.9 | 1.8 | 1.6 | 0.5 | 1.7 | 5.9 |
| Example 2-1 | 91/7/2 | 3.0 | 1.5 | 2.0 | 1.5 | 1.4 | 3.3 |
| Example 2-2 | 91/7/2 | 3.0 | 1.6 | 1.9 | 1.4 | 1.2 | 3.9 |
| Comparative Example 2 | 91/7/2 | 2.9 | 1.9 | 1.5 | 0.5 | 1.6 | 6.9 |
| Example 3 | 50/20/30 | 2.9 | 1.5 | 1.9 | 1.4 | 0.8 | 4.7 |
| Comparative Example 3 | 50/20/30 | 2.9 | 1.7 | 1.7 | 2.8 | 0.6 | 10.0 |

[Table 2]

| | Discharge rate characteristics 10 CA/0.2 CA Discharge capacity ratio (%) | Cycle characteristics Cycle retention rate (%) |
|---|---|---|
| Example 1-1 | 47 | 81 |
| Example 1-2 | 57 | 86 |
| Example 1-3 | 54 | 90 |
| Comparative Example 1 | 29 | 81 |
| Example 2-1 | 45 | 85 |
| Example 2-2 | 41 | 82 |
| Comparative Example 2 | 21 | 73 |
| Example 3 | 70 | 84 |
| Comparative Example 3 | 56 | 71 |

[Table 3]

| | Ni/Co/Mn | X (g/cm$^3$) | Y (g/cm$^3$) | X/Y |
|---|---|---|---|---|
| Nickel-containing transition metal complex hydroxide 2 used in Examples 1-1 to 1-3 | 88/8/4 | 2.0 | 1.0 | 2.0 |
| Nickel-containing transition metal complex hydroxide 3 used in Comparative Example 1 | 88/8/4 | 2.0 | 1.5 | 1.3 |
| Nickel-containing transition metal complex hydroxide 5 used in Example 2-1 | 91/7/2 | 2.1 | 1.4 | 1.5 |
| Nickel-containing transition metal complex hydroxide 4 used in Example 2-2 and Comparative Example 2 | 91/7/2 | 2.1 | 1.5 | 1.4 |
| Nickel-containing transition metal complex hydroxide 6 used in Example 3 and Comparative Example 3 | 50/20/30 | 2.2 | 2.0 | 1.1 |

As shown in Table 1, Example 1-1, Example 1-2, and Example 1-3 had favorable discharge rate characteristics and favorable cycle characteristics compared with Comparative Example 1. Similarly, the discharge rate characteristics and the cycle retention rates were more favorable in Example 2-1 and Example 2-2 than in Comparative Example 2 and more favorable in Example 3 than in Comparative Example 3.

When a lithium transition metal complex oxide obtained from a nickel-containing transition metal complex hydroxide to which the present invention is applied and a lithium transition metal complex oxide obtained from a nickel-containing transition metal complex hydroxide powder to which the present invention is not applied are compared with each other, the discharge rate characteristics and the cycle characteristics were more favorable in Example 1-1, Example 1-2, and Example 1-3 than in Comparative Example 1 and more favorable in Example 2-1 than in Example 2-2 and Comparative Example 2.

**[Reference Signs List]**

1: Separator
2: Positive electrode
3: Negative electrode
4: Electrode group

5: Battery can
6: Electrolytic solution
7: Top insulator
8: Sealing body
10: Lithium secondary battery
21: Positive electrode lead
31: Negative electrode lead

**Claims**

1. A lithium transition metal complex oxide powder,

   wherein the following requirements (1) and (2) are satisfied,
   requirement (1): when a press density obtained by compressing the lithium transition metal complex oxide powder at a pressure of 45 MPa is defined as A and a tapped density of the lithium transition metal complex oxide powder is defined as B, A/B that is a ratio between A and B is 1.8 or more and 3.5 or less, and
   requirement (2): A, which is the press density, exceeds 2.7 g/cm$^3$.

2. The lithium transition metal complex oxide powder according to Claim 1,
   wherein an average primary particle diameter is 1.0 $\mu$m or more.

3. The lithium transition metal complex oxide powder according to Claim 1 or 2,
   wherein the following formula (I) is satisfied,

$$\mathrm{Li[Li}_x(\mathrm{Ni}_{(1-y-z-w)}\mathrm{Co}_y\mathrm{Mn}_z\mathrm{M}_w)_{1-x}\mathrm{]O}_2 \text{ ...} \qquad \text{(I)}$$

   (here, $-0.1 \leq x \leq 0.2$, $0 \leq y \leq 0.4$, $0 \leq z \leq 0.4$, $0 \leq w \leq 0.1$, and $y + z + w < 1$ are satisfied, and M represents one or more elements selected from the group consisting of Fe, Cu, Ti, Mg, Al, W, B, Mo, Nb, Zn, Sn, Zr, Ga, La, and V).

4. The lithium transition metal complex oxide powder according to any one of Claims 1 to 3,
   wherein a BET specific surface area is 0.1 m$^2$/g or more and 3 m$^2$/g or less.

5. The lithium transition metal complex oxide powder according to any one of Claims 1 to 4,
   wherein an average particle diameter (D$_{50}$) in particle size distribution measurement is 1 $\mu$m or more and 5 $\mu$m or less.

6. A nickel-containing transition metal complex hydroxide powder,

   wherein the following requirements (S) and (T) are satisfied,
   requirement (S): when a press density obtained by compressing the nickel-containing transition metal complex hydroxide powder at a pressure of 45 MPa is defined as X and a tapped density of the nickel-containing transition metal complex hydroxide powder is defined as Y, X/Y that is a ratio between X and Y is 1.5 or more and 2.5 or less, and
   requirement (T): X, which is the press density, exceeds 1.8 g/cm$^3$.

7. The nickel-containing transition metal complex hydroxide powder according to Claim 6,
   wherein the following formula (II) that represents mole ratios of metal elements is satisfied and, in the following formula (II) that represents the mole ratios of the metal **elements, $0 \leq a \leq 0.4$, $0 \leq b \leq 0.4$, and $0 \leq c \leq 0.1$** are satisfied,

$$\mathrm{Ni : Co : Mn : M}^1 = (1 - a - b - c) : a : b : c \text{ ...} \qquad \text{(II)}$$

   (here, M$^1$ is one or more elements selected from the group consisting of Fe, Cu, Ti, Mg, Al, W, B, Mo, Nb, Zn, Sn, Zr, Ga, La, and V).

8. A positive electrode active material for a lithium secondary battery, comprising:
   the lithium transition metal complex oxide powder according to any one of Claims 1 to 5.

9. A positive electrode for a lithium secondary battery, comprising:

the positive electrode active material for a lithium secondary battery according to Claim 8.

10. A lithium secondary battery comprising:
the positive electrode for a lithium secondary battery according to Claim 9.

FIG. 1A

FIG. 1B

FIG. 2

<table>
<tr><td colspan="2"><strong>INTERNATIONAL SEARCH REPORT</strong></td><td>International application No.<br>PCT/JP2019/049991</td></tr>
</table>

**A. CLASSIFICATION OF SUBJECT MATTER**
Int.Cl. C01G53/00(2006.01)i, H01M4/505(2010.01)i, H01M4/525(2010.01)i
FI: C01G53/00A, H01M4/525, H01M4/505

According to International Patent Classification (IPC) or to both national classification and IPC

**B. FIELDS SEARCHED**

Minimum documentation searched (classification system followed by classification symbols)
Int.Cl. C01G53/00, H01M4/505, H01M4/525

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | CN 107804879 A (CHONGQING TERUI NEW ENERGY MATERIAL CO., LTD.) 16.03.2018 (2018-03-16), examples 1-5 | 1-3, 5, 8-10<br>4, 6-7 |
| X | JP 2013-211239 A (TODA KOGYO CORP.) 10.10.2013 (2013-10-10), example 8, comparative example 2 | 1, 4-10 |
| X | JP 2004-182564 A (NIPPON CHEMICAL INDUSTRIAL CO., LTD.) 02.07.2004 (2004-07-02), production examples 7, 10, comparative example 2 | 1, 2, 5, 8-10 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06.02.2020 | Date of mailing of the international search report<br>18.02.2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.

PCT/JP2019/049991

```
CN 107804879 A      16.03.2018    (Family: none)

JP 2013-211239 A   10.10.2013    US 2015/0060725 A1
                                  example 8, comparative
                                  example 2
                                  WO 2013/146287 A1
                                  EP 2833445 A1
                                  CN 104247100 A
                                  KR 10-2014-0138780 A

JP 2004-182564 A   02.07.2004    (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018238842 A
- JP 2011105565 A
- JP 2002201028 A